# EUROPEAN PATENT APPLICATION

(11) **EP 4 842 071 A1**
(43) Date of publication of application: **18.11.2026**
(21) Application number: 25744484.4
(22) Date of filing: 15.01.2025
(51) Int. Cl.: H04W 48/16

(54) **COMMUNICATION METHOD, COMMUNICATION APPARATUS AND RELATED PRODUCT**

(30) Priority: 22.01.2024 CN 202410087459
(71) Applicant: Huawei Technologies Co., Ltd., Shenzhen, Guangdong 518129 (CN)
(72) Inventor: CHEN, Ying, Shenzhen, Guangdong 518129 (CN); TIE, Xiaolei, Shenzhen, Guangdong 518129 (CN)
(74) Representative: Huawei European IPR
(86) International application number: PCT/CN2025/072381
(87) International publication number: WO 2025/157041

(57) **Abstract**

This application discloses a communication method, a communication apparatus, and a related product. This application may be applied to a non-terrestrial network communication scenario. The method includes: receiving first information, where the first information is used to determine a first time period, the first time period is a time period during which a network device is in a first mode, and the first mode is a mode in which cell access is supported; and performing cell access within the first time period. The first mode may be a mode in which cell access of a communication apparatus is supported. In this application, cell access is performed within the first time period, and no cell access is performed from the time the first information is received, until the start time of the first time period, eliminating the need to monitor a channel and/or receive a downlink signal, thereby reducing power consumption. Because the first time period is a time period during which the network device is in the first mode, performing cell access within the first time period enables successful access to a cell managed by the network device.

## Description

This application claims priority to Chinese Patent Application No. 202410087459.3, filed with the China National Intellectual Property Administration on January 22, 2024 and entitled "COMMUNICATION METHOD, COMMUNICATION APPARATUS, AND RELATED PRODUCT", which is incorporated herein by reference in its entirety.

### TECHNICAL FIELD

This application relates to the communication field, and in particular, to a communication method, a communication apparatus, and a related product.

### BACKGROUND

Non-terrestrial networks (Non-Terrestrial Networks, NTNs) represented by non-terrestrial devices such as satellites, uncrewed aerial vehicles, and high-altitude platforms have advantages such as wide coverage, long communication distances, high reliability, high flexibility, and high throughput. The non-terrestrial networks can be introduced into 5th-generation (5th-Generation, 5G) mobile networks to provide communication services for areas beyond the coverage of terrestrial networks (terrestrial networks, TN) such as oceans or forests, enhance the reliability of 5G communication by providing more stable and higher-quality communication services for trains and airplanes and users on these vehicles, and provide more data transmission resources and support more connections.

Currently, satellite communication has been introduced into a 3rd generation partnership project (3rd generation partnership project, 3GPP) standard as a communication scenario for 5G communication. Satellite communication supports various 5G terminals and internet of things (internet of things) terminals. Satellite communication is mainly characterized by high mobility and long communication delays.

Since satellites are powered by solar energy, energy saving on the network side is significant for satellite communication. However, existing satellite communication protocols not only fail to address power saving, but also introduce additional satellite-related signaling overhead on top of terrestrial communication.

### SUMMARY

According to a first aspect, an embodiment of this application provides a communication method. The method includes: receiving first information, where the first information is used to determine a first time period, the first time period is a time period during which a network device is in a first mode, and the first mode is a mode in which cell access is supported; and performing cell access within the first time period. The method in the first aspect may be applied to a non-terrestrial network (non-terrestrial network, NTN) communication scenario. The first mode may be a mode in which cell access of a communication apparatus is supported. The execution subject of the first aspect may be the communication apparatus, which may be a terminal device, or may be a processor, a module, a chip, a chip system, or the like in the terminal device that implements the method.

In this embodiment of this application, cell access is performed within the first time period, and no cell access is performed from the time the first information is received until a start time of the first time period, eliminating the need to monitor a channel and/or receive a downlink signal, thereby reducing power consumption. Because the first time period is a time period during which the network device is in the first mode, performing cell access within the first time period enables successful access to a cell managed by the network device.

In a possible implementation, after receiving the first information, the method further includes: determining the first time period based on the first information.

In this implementation, the first time period is determined based on the first information, to perform cell access within the first time period.

In a possible implementation, the receiving the first information includes: when no cell managed by the network device is accessed, receiving a broadcast message including the first information. The broadcast message including the first information may be generated and sent by a non-terrestrial network device (for example, a satellite), or may be transparently forwarded by a non-terrestrial network device. For example, the network device is a base station deployed on a non-terrestrial network device (for example, a satellite), and the broadcast message including the first information may be generated and sent by the non-terrestrial network device (for example, the satellite). For example, the network device is a base station deployed on the ground and connected to a ground station that communicates with a non-terrestrial network device (for example, a satellite), and the broadcast message that is generated by the network device and includes the first information is transparently forwarded by the non-terrestrial network device via the ground station.

In this implementation, when no cell managed by the network device is accessed, the broadcast message including the first information is received, so that the first time period can be determined, to perform cell access in time.

In a possible implementation, the first information is sent by the network device in a second mode, and the second mode is a mode in which the network device sends a part of system messages for cell access or a mode in which the network device does not send a system message for cell access. For example, operating modes of the network device (for example, a base station) include the first mode and the second mode. In the first mode, the network device sends all system messages used by the communication apparatus to perform cell access. In the second mode, the network device does not send any system message used by the communication apparatus to perform cell access or sends a part of system messages used by the communication apparatus to perform cell access. Fewer messages are sent and less power is consumed in the second mode than the first mode.

In this implementation, the first information is sent by the network device in the second mode, and no cell access is performed from the time the first information is received until the start time of the first time period (that is, the network device enters the first mode), eliminating the need to monitor a channel and/or receive a downlink signal, thereby reducing power consumption.

In a possible implementation, after receiving the first information, the method includes: sending second information within a second time period, where the second information is used to request the network device to switch from the second mode to the first mode, the second mode is a mode in which cell access is not supported, and the second time period is determined based on a time at which the first information is received.

In this implementation, the second information may be sent within the second time period to request the network device to switch from the second mode to the first mode, so as to access a cell managed by the network device.

In a possible implementation, before sending the second information within the second time period, the method further includes: determining the second time period based on the time at which the first information is received, where the second time period is a time period during which the network device receives an uplink signal. A duration of the second time period may be predefined. The second time period may be a time period during which the network device receives an uplink signal when the network device is in the second mode. For example, when the network device is in the second mode, the network device receives an uplink signal only within the second time period.

In this implementation, the second time period is determined based on the time at which the first information is received, to send the second information within the second time period.

In a possible implementation, there is an offset of f2 time units between a start time of the second time period and the time at which the first information is received (by the communication apparatus), and f2 is an integer greater than 0. For example, the time at which the communication apparatus receives the first information may be a time at which the broadcast message including the first information is received.

In this implementation, with the offset of f2 time units between the start time of the second time period and the time at which the communication apparatus receives the first information, the start time of the second time period can be accurately determined based on the time at which the first information is received and the offset.

In a possible implementation, before the performing cell access within the first time period, the method further includes: receiving third information, where the third information indicates that the network device accepts the request for switching from the second mode to the first mode; and the performing cell access within the first time period includes: performing cell access within the first time period in response to the third information.

In this implementation, in response to the third information, performing cell access within the first time period enables successful access to a cell managed by the network device.

In a possible implementation, after sending the second information within the second time period, the method further includes: entering a fourth mode, where the fourth mode is a mode in which no channel (for example, a physical downlink control channel (physical downlink control channel, PDCCH)) is monitored. The entering the fourth mode may be disabling a receiver, that is, stopping monitoring a channel, for example, a PDCCH. For example, after entering the fourth mode, the communication apparatus disables the receiver, and no longer monitors the PDCCH. For example, an operation performed by the communication apparatus in the fourth mode does not include a first operation, and the first operation includes at least one of the following: monitoring a control channel, receiving a downlink signal, or sending an uplink signal.

In this implementation, after the first information is received, the fourth mode is entered, so that power consumption can be reduced.

In a possible implementation, the first information indicates at least one of the following: a remaining duration of the network device in the second mode, a duration of the network device in the second mode, a periodicity of the network device in the second mode, a duration of the network device in the first mode, or a periodicity of the network device in the first mode, and the second mode is a mode in which cell access is not supported. The second mode may be a mode in which cell access of the communication apparatus is not supported. For example, the second mode is a mode in which the network device sends a part of system messages for cell access or a mode in which the network device does not send a system message for cell access. For example, the first information indicates the remaining duration of the network device in the second mode. For example, the first information indicates the periodicity, the remaining duration, and the duration of the network device in the second mode. For example, the first information indicates the remaining duration of the network device in the second mode, the duration of the network device in the first mode, and the periodicity of the network device in the first mode. The periodicity of the network device in the first mode may be equal to the periodicity of the network device in the second mode. The periodicity of the network device in the first mode may be equal to a sum of the duration of the network device in the first mode and the duration of the network device in the first mode.

In this implementation, the first information indicates at least one of the remaining duration, the duration, and the periodicity of the network device in the second mode, and the duration and the periodicity of the network device in the first mode, so that the communication apparatus determines the first time period based on at least one of the periodicity, the remaining duration, and the duration of the network device in the second mode.

In a possible implementation, the start time of the first time period is related to a start time or an end time at which the second information is sent. In this application, an example in which the first information is used to determine the first time period is as follows: determining the second time period based on the first information, where the second time period is a time for sending the second information used to request the network device to switch from the second mode to the first mode; and determining the start time of the first time period based on the start time or the end time at which the second information is sent. A duration of the first time period may be predefined.

In a possible implementation, there is an offset of y1 time units between the start time of the first time period and the start time or the end time at which the second information is sent, and y1 is an integer greater than 0.

In a possible implementation, after receiving the first information, the method further includes: entering the fourth mode (or named a power saving mode, a sleep mode, an inactive mode, or the like), where the fourth mode is a mode in which no channel (for example, a PDCCH) is monitored.

In this implementation, after the first information is received, the fourth mode is entered, so that power consumption can be reduced.

In a possible implementation, the performing cell access within the first time period includes: receiving, within the first time period, a signal (for example, including a downlink synchronization signal and a system message) for cell access; and performing cell access if the signal for cell access is received. It should be understood that if no signal for cell access is received within the first time period, cell access is not performed.

In this implementation, a signal for cell access is received within the first time period, to perform cell access by using the received signal for cell access.

In a possible implementation, before the performing cell access within the first time period, the method further includes: switching from the fourth mode to a third mode (or named a wake-up mode, a normal mode, an active mode, or the like), where the fourth mode is a mode in which no channel (for example, a PDCCH) is monitored, and the third mode is a mode in which a channel is monitored. For example, the fourth mode is a sleep state of a discontinuous reception (discontinuous reception, DRX) mode of the communication apparatus, and the third mode is an active state of the DRX mode of the communication apparatus. For example, an operation performed by the communication apparatus in the fourth mode does not include the first operation, an operation performed by the communication apparatus in the third mode includes the first operation, and the first operation includes at least one of the following: monitoring a control channel, receiving a downlink signal, or sending an uplink signal.

In this implementation, before cell access is performed within the first time period, the communication apparatus switches from the fourth mode to the third mode to perform cell access. In addition, before cell access is performed within the first time period, the communication apparatus is in the fourth mode, so that power consumption can be reduced.

In a possible implementation, the first information indicates the remaining duration of the network device in the second mode; before the performing cell access within the first time period, the method further includes: starting a timer based on the first information, where a timing duration of the timer is greater than or equal to the remaining duration of the second mode that the network device is currently in; and the performing cell access within the first time period includes: performing cell access after the timer expires.

In this implementation, after the timer expires, cell access is performed to access, in time, a cell managed by the network device.

In a possible implementation, after the timer is started and before the timer expires, the method further includes: entering the fourth mode (or power saving mode), where the fourth mode is a mode in which no channel (for example, a PDCCH) is monitored.

In this implementation, before the timer expires, the fourth mode is entered, so that power consumption can be reduced.

In a possible implementation, after the starting the timer and before the performing cell access, the method further includes: switching from the fourth mode to the third mode, where the third mode is a mode in which a channel is monitored.

In this implementation, before cell access is performed, the communication apparatus switches from the fourth mode to the third mode to perform cell access. In addition, before cell access is performed, the communication apparatus is in the fourth mode, so that power consumption can be reduced.

In a possible implementation, before receiving the first information, the method further includes: receiving a first downlink signal; and determining, based on a time domain position and/or a frequency domain position of the first downlink signal, a time domain position and/or a frequency domain position at which the network device sends the first information, where there is an offset of f1 time units between a start time or an end time at which the first downlink signal is received and a start time at which the first information is sent or received, f1 is an integer greater than 0, and the frequency domain position of the first downlink signal is related to the frequency domain position of the first information.

In this implementation, the time domain position and/or the frequency domain position at which the network device sends the first information are/is determined based on the time domain position and/or the frequency domain position of the first downlink signal, to better receive the first information.

In a possible implementation, the first downlink signal includes one of a primary synchronization signal (primary synchronization signal, PSS) and a secondary synchronization signal (secondary synchronization signal, SSS).

In this implementation, the first downlink signal includes one of the primary synchronization signal and the secondary synchronization signal, so that power consumption can be reduced for the network device.

In a possible implementation, after the determining, based on the time domain position and/or the frequency domain position of the first downlink signal, the time domain position and/or the frequency domain position at which the network device sends the first information, and before the time domain position at which the network device sends the first information arrives, the method further includes: entering the fourth mode, where the fourth mode is a mode in which no channel (for example, a PDCCH) is monitored.

In this implementation, before the time domain position at which the network device sends the first information arrives, the fourth mode is entered, so that power consumption can be reduced.

In a possible implementation, the method further includes: when a first cell managed by the network device is accessed or camped on, switching from the third mode to the fourth mode at a first time (a moment) determined based on the first information, where the second mode is a mode in which cell access is not supported, an operation performed in the third mode includes the first operation, an operation performed in the fourth mode does not include the first operation, and the first operation includes at least one of the following: monitoring a control channel, receiving a downlink signal, or sending an uplink signal. For example, the first time is a moment that is determined based on the first information and at which the network device enters the second mode.

In this implementation, when the network device enters the second mode, the communication apparatus switches from the third mode to the fourth mode, so that power consumption can be reduced.

In a possible implementation, the method further includes: when a first cell managed by the network device is accessed, switching from a connected mode to an idle mode at a second time determined based on the first information, where the second mode is a mode in which cell access is not supported. For example, the second time is a moment that is determined based on the first information and at which the network device enters the second mode.

In this implementation, when the network device enters the second mode, the communication apparatus switches from the connected mode to the idle mode, so that power consumption can be reduced.

In a possible implementation, the method further includes: when a first cell managed by the network device is accessed, handing over to a second cell before the network device enters the second mode, where the second cell is associated with a first network device different from the network device, and the second mode is a mode in which cell access is not supported.

In this implementation, before the network device enters the second mode, the communication apparatus hands over to the second cell, so that service continuity can be ensured.

In a possible implementation, the method further includes: when a first cell managed by the network device is accessed, performing a second operation or a third operation based on a type of a currently executed service, where the second operation includes performing cell handover before the network device enters the second mode, and the third operation includes camping on the first cell after the network device enters the second mode.

In this implementation, the second operation or the third operation is performed based on the type of the currently executed service, to meet requirements of different types of services.

In a possible implementation, the performing the second operation or the third operation based on the type of the currently executed service includes: performing the second operation when the currently executed service has a continuity requirement; and/or performing the third operation when the currently executed service does not have a continuity requirement.

In this implementation, when the currently executed service has a continuity requirement, the second operation is performed to hand over to the second cell, so that the continuity requirement of the service can be met. When the currently executed service does not have a continuity requirement, the third operation is performed, so that unnecessary operations can be reduced, and power consumption can be reduced.

In a possible implementation, the third operation further includes entering the fourth mode, an operation performed by the communication apparatus in the fourth mode does not include the first operation, and the first operation includes at least one of the following: monitoring a control channel, receiving a downlink signal, or sending an uplink signal.

In this implementation, power consumption of the communication apparatus can be reduced.

In a possible implementation, the method further includes: when the first cell managed by the network device is accessed, sending an uplink signal by using a first resource when the network device is in the second mode, where the first resource is associated with a downlink synchronization signal, and the second mode is a mode in which cell access is not supported.

In this implementation, when the network device is in the second mode, the uplink signal is sent by using the first resource, so that the uplink signal can be sent before the network device enters the first mode. In this way, the uplink signal can be sent earlier.

In a possible implementation, the sending the uplink signal by using the first resource includes: sending the uplink signal based on synchronization information by using the first resource, where the synchronization information is obtained based on a message sent by the network device in the second mode, or the synchronization information is obtained based on a message sent by the network device in the first mode, and the second mode is a mode in which cell access is not supported.

In this implementation, the uplink signal is sent based on the synchronization information by using the first resource, so that the uplink signal can be sent when the network device is in the second mode, and the network device receives the uplink signal earlier.

In a possible implementation, the first information further includes the synchronization information. For example, the synchronization information is included in the first information.

In this implementation, the synchronization information is obtained based on the first information, so that the synchronization information does not need to be additionally sent, and signaling overhead can be reduced.

According to a second aspect, an embodiment of this application provides another communication method. The method is applied to a non-terrestrial network communication scenario. The method includes: When a communication apparatus accesses or camps on a first cell managed by a network device, the communication apparatus switches from a third mode to a fourth mode when the network device switches from a first mode to a second mode, where the first mode is a mode in which cell access is supported, the second mode is a mode in which cell access is not supported, an operation performed by the communication apparatus in the third mode includes a first operation, an operation performed by the communication apparatus in the fourth mode does not include the first operation, and the first operation includes at least one of the following: monitoring a control channel, receiving a downlink signal, or sending an uplink signal. Power consumption of the communication apparatus in the third mode is lower than that in the fourth mode. The switching from the third mode to the fourth mode when the network device switches from the first mode to the second mode may be as follows: A time interval between a moment at which the network device switches from the first mode to the second mode and a moment at which the communication apparatus switches from the third mode to the fourth mode is less than a time threshold, for example, 50 µs, 100 µs, 1 ms, 3 ms, 5 ms, or 10 ms. The switching from the third mode to the fourth mode when the network device switches from the first mode to the second mode may be replaced with switching from the third mode to the fourth mode after the network device switches from the first mode to the second mode.

In this embodiment of this application, when the network device switches from the first mode to the second mode, the communication apparatus switches from the third mode to the fourth mode, so that power consumption can be reduced.

In a possible implementation, the method further includes: receiving fourth information; and determining, based on the fourth information, a time period during which the network device is in the first mode or the second mode. The fourth information may be received by the communication apparatus after or before the communication apparatus accesses the first cell. The determining, based on the fourth information, the time period during which the network device is in the first mode or the second mode may be replaced with determining, based on the fourth information, a time at which the network device switches from the first mode to the second mode.

In this implementation, the time period during which the network device is in the first mode or the second mode is determined based on the fourth information, to switch from the third mode to the fourth mode when the network device switches from the first mode to the second mode.

According to a third aspect, an embodiment of this application provides another communication method. The method is applied to a non-terrestrial network communication scenario. The method includes: when a first cell managed by a network device is accessed, switching from a connected mode to an idle mode when the network device switches from a first mode to a second mode, where the first mode is a mode in which cell access is supported, and the second mode is a mode in which cell access is not supported. The switching from the connected mode to the idle mode when the network device switches from the first mode to the second mode may be replaced with switching from the connected mode to the idle mode after the network device switches from the first mode to the second mode. The switching from the connected mode to the idle mode when the network device switches from the first mode to the second mode may be as follows: A time interval between a moment at which the network device switches from the first mode to the second mode and a moment at which a communication apparatus switches from the connected mode to the idle mode is less than a time threshold, for example, 50 µs, 100 µs, 1 ms, 3 ms, 5 ms, or 10 ms.

In this embodiment of this application, when the network device switches from the first mode to the second mode, the communication apparatus switches from the connected mode to the idle mode, so that power consumption can be reduced.

In a possible implementation, the method further includes: receiving fourth information; and determining, based on the fourth information, a time period during which the network device is in the first mode or the second mode. The fourth information may be received by the communication apparatus after or before the communication apparatus accesses the first cell. The determining, based on the fourth information, the time period during which the network device is in the first mode or the second mode may be replaced with determining, based on the fourth information, a time at which the network device switches from the first mode to the second mode.

In this implementation, the time period during which the network device is in the first mode or the second mode is determined based on the fourth information, to switch from the connected mode to the idle mode when network device switches from the first mode to the second mode.

According to a fourth aspect, an embodiment of this application provides another communication method. The method is applied to a non-terrestrial network communication scenario. The method includes: when a first cell managed by a network device is accessed, handing over to a second cell before the network device enters a second mode, where the second cell is associated with a first network device different from the network device, and the second mode is a mode in which cell access is not supported.

In this embodiment of this application, before the network device enters the second mode, a communication apparatus hands over to the second cell, so that service continuity can be ensured.

In a possible implementation, the method further includes: receiving fourth information; and determining, based on the fourth information, a time period during which the network device is in the first mode or the second mode. The fourth information may be received by the communication apparatus after or before the communication apparatus accesses the first cell. The determining, based on the fourth information, the time period during which the network device is in the first mode or the second mode may be replaced with determining, based on the fourth information, a time at which the network device enters the second mode.

In this implementation, the time period during which the network device is in the first mode or the second mode is determined based on the fourth information, to hand over to the second cell before the network device enters the second mode.

According to a fifth aspect, an embodiment of this application provides another communication method. The method is applied to a non-terrestrial network communication scenario. The method includes: when a first cell managed by a network device is accessed, performing a second operation or a third operation based on a type of a currently executed service, where the second operation includes performing cell handover before the network device enters a second mode, the third operation includes camping on the first cell after the network device enters the second mode, and the second mode is a mode in which cell access is not supported.

In this embodiment of this application, the second operation or the third operation is performed based on the type of the currently executed service, so that requirements of different types of services can be met.

In a possible implementation, the performing the second operation or the third operation based on the type of the currently executed service includes: performing the second operation when the currently executed service has a continuity requirement; and/or performing the third operation when the currently executed service does not have a continuity requirement.

In this implementation, when the currently executed service has a continuity requirement, the second operation is performed, so that the continuity requirement of the service can be met. When the currently executed service does not have a continuity requirement, the third operation is performed, so that power consumption can be reduced.

According to a sixth aspect, an embodiment of this application provides another communication method. The method is applied to a non-terrestrial network communication scenario. The method includes: when a first cell managed by a network device is accessed, sending an uplink signal by using a first resource when the network device is in a second mode, where the first resource is associated with a downlink synchronization signal, and the second mode is a mode in which cell access is not supported.

In this embodiment of this application, when the network device is in the second mode, the uplink signal is sent by using the first resource, which saves a need to allocate, by using downlink scheduling information, a resource for sending the uplink signal, so that signaling overhead can be reduced.

In a possible implementation, the sending the uplink signal by using the first resource includes: sending the uplink signal based on synchronization information by using the first resource, where the synchronization information is obtained based on a message sent by the network device in the second mode, or the synchronization information is obtained based on a message sent by the network device in a first mode, and the first mode is a mode in which cell access is supported.

In this implementation, the uplink signal is sent based on the synchronization information by using the first resource, and the uplink signal may be sent when the network device is in the second mode.

In a possible implementation, the first information further includes the synchronization information.

In a possible implementation, the first information is carried in a broadcast message.

According to a seventh aspect, an embodiment of this application provides another communication method. The method includes: determining first information, where the first information is used to determine a first time period, the first time period is a time period during which a network device is in a first mode, and the first mode is a mode in which cell access is supported; and sending the first information. The first mode may be a mode in which cell access of a communication apparatus is supported. The execution subject of the seventh aspect may be the network device or a processor, a module, a chip, a chip system, or the like in the network device that implements the method. The method in the seventh aspect may be applied to a non-terrestrial network communication scenario. For example, the network device is a base station deployed on a non-terrestrial network device (for example, a satellite). For another example, the network device is a base station deployed on the ground and connected to a ground station that communicates with a non-terrestrial network device (for example, a satellite). That the first mode is a mode in which cell access is supported may be replaced with that the first mode is a mode in which the network device sends all system messages for cell access.

In this embodiment of this application, the first information is sent, so that the communication apparatus determines the first time period based on the first information, and then performs cell access within the first time period.

In a possible implementation, the sending the first information includes: sending, in a first beam direction, a broadcast message including the first information. The first beam direction is one or more of a plurality of beam directions of the network device. In other words, the network device does not send, in a part of beam directions, the broadcast message including the first information.

In this implementation, the broadcast message including the first information is sent in the first beam direction, so that each terminal device in the beam direction can receive the broadcast message including the first information, and signaling overhead is low.

In a possible implementation, the sending the first information includes: sending the first information when in a second mode, where the second mode is a mode in which cell access is not supported. In other words, the second mode is a mode in which the network device sends a part of system messages for cell access or a mode in which the network device does not send a system message for cell access. For example, operating modes of the network device (for example, a base station) include the first mode and the second mode. In the first mode, the network device sends all system messages used by the communication apparatus to perform cell access. In the second mode, the network device does not send any system message used by the communication apparatus to perform cell access or sends a part of system messages used by the communication apparatus to perform cell access. Fewer messages are sent and less power is consumed in the second mode than the first mode.

In this implementation, when in the second mode, the first information is sent, and not all the system messages for cell access need to be sent, so that power consumption can be reduced.

In a possible implementation, the first information indicates at least one of the following: a remaining duration of the network device in the second mode, a duration of the network device in the second mode, a periodicity of the network device in the second mode, a duration of the network device in the first mode, or a periodicity of the network device in the first mode, and the second mode is a mode in which cell access is not supported. The second mode may be a mode in which cell access of the communication apparatus is not supported.

In this implementation, the first information indicates at least one of the remaining duration, the duration, and the periodicity of the network device in the second mode, and the duration and the periodicity of the network device in the first mode, so that the communication apparatus determines the first time period based on at least one of the periodicity, the remaining duration, and the duration of the network device in the second mode.

In a possible implementation, after sending the first information, the method further includes: switching from the second mode to the first mode when a start time of the first time period arrives, where the second mode is a mode in which cell access is not supported.

In this implementation, the network device switches between the first mode and the second mode, which can ensure communication of the communication apparatus and reduce power consumption.

In a possible implementation, after sending the first information, the method includes: switching from the second mode to the first mode when second information is received within a second time period, where the second information is used to request the network device to switch from the second mode to the first mode, the first mode is a mode in which cell access is supported, the second mode is a mode in which cell access is not supported, and the second time period is determined based on a time at which the first information is sent.

In this implementation, when the second information is received within the second time period, the network device switches from the second mode to the first mode, so that the communication apparatus (or terminal device) can access, in time, a cell managed by the network device.

In a possible implementation, there is an offset of f2 time units between a start time of the second time period and the time at which the first information is sent, and f2 is an integer greater than 0. For example, the time at which the first information is sent may be a time at which the broadcast message including the first information is sent.

In this implementation, with the offset of f2 time units between the start time of the second time period and the time at which the first information is sent, the start time of the second time period can be accurately determined based on the time at which the first information is sent and the offset.

In a possible implementation, the switching from the second mode to the first mode includes: switching from the second mode to the first mode when a start time of a third time period arrives, where the third time period is a time period during which the network device is in the first mode.

In this implementation, when the start time of the third time period arrives, the network device switches from the second mode to the first mode, so that the communication apparatus (or terminal device) can access, in time, a cell managed by the network device.

In a possible implementation, the method further includes: performing a fourth operation within the third time period when the second information is not received within the second time period, where the fourth operation does not include switching from the second mode to the first mode.

In this implementation, when the second information is not received within the second time period, the fourth operation is performed within the third time period, so that power consumption can be reduced.

In a possible implementation, the switching from the second mode to the first mode includes: switching from the second mode to the first mode when a first start time arrives, where the first start time is related to a start time or an end time at which the second information is received.

In this implementation, when the first start time arrives, the network device switches from the second mode to the first mode, so that the communication apparatus accesses, in time, a cell managed by the network device.

In a possible implementation, there is an offset of y1 time units between the first start time and the start time or the end time at which the second information is received, and y1 is an integer greater than 0.

In this implementation, with the offset of y1 time units between the first start time and the start time or the end time at which the second information is received, the first start time can be accurately determined.

In a possible implementation, before sending the first information, the method further includes: sending a first downlink signal, where the first downlink signal is used for at least one of the following: determining that the network device is in the second mode, determining a time domain position at which the network device sends the first information, determining a frequency domain position at which the network device sends the first information, or performing downlink synchronization, the second mode is a mode in which cell access is not supported, there is an offset of f1 time units between a start time or an end time at which the first downlink signal is sent and a start time at which the first information is sent or received, f1 is an integer greater than 0, and a frequency domain position of the first downlink signal is related to the frequency domain position of the first information. For example, the first downlink signal is a downlink synchronization signal.

In this implementation, the first downlink signal is sent, so that the communication apparatus performs at least one of the following: determining the frequency domain position of the first information, determining the time domain position of the first information, determining that the network device is in the second mode, or performing downlink synchronization.

In a possible implementation, the method is applied to the network device, and the method further includes: when in the second mode, receiving an uplink signal carried on a first resource, where the first resource is associated with a downlink synchronization signal sent by the network device, and the second mode is a mode in which cell access is not supported.

In this implementation, the uplink signal carried on the first resource is received when in the second mode, so that the uplink signal can be received in the second mode.

In a possible implementation, the first information is carried in a broadcast message, and the broadcast message further carries information used by the communication apparatus to obtain synchronization information. For example, the broadcast message further carries information used by the communication apparatus to obtain uplink synchronization information.

In this implementation, the broadcast message further carries information used by the communication apparatus to obtain synchronization information, so that the communication apparatus sends an uplink signal based on the synchronization information.

According to an eighth aspect, an embodiment of this application provides a communication apparatus. The communication apparatus has a function of implementing behavior in the method embodiment of the first aspect. The communication apparatus may be a terminal device, or may be a component (for example, a processor, a chip, or a chip system) of the terminal device, or may be a logic module or software that can implement all or a part of functions of the terminal device. The function of the communication apparatus may be implemented by hardware, or may be implemented by hardware executing corresponding software. The hardware or the software includes one or more modules or units corresponding to the function. In a possible implementation, the communication apparatus includes a transceiver module and a processing module. The transceiver module is configured to receive first information, where the first information is used to determine a first time period, the first time period is a time period during which a network device is in a first mode, and the first mode is a mode in which cell access is supported. The processing module is configured to perform cell access within the first time period. The first mode may be a mode in which cell access of the communication apparatus is supported.

In a possible implementation, the processing module is further configured to determine the first time period based on the first information.

In a possible implementation, the transceiver module is specifically configured to: when the communication apparatus accesses no cell managed by the network device, receive a broadcast message including the first information.

In a possible implementation, the transceiver module is further configured to send second information within a second time period, where the second information is used to request the network device to switch from a second mode to the first mode, the second mode is a mode in which cell access is not supported, and the second time period is determined based on a time at which the first information is received.

In a possible implementation, the processing module is further configured to determine the second time period based on the time at which the first information is received, where the second time period is a time period during which the network device receives an uplink signal.

In a possible implementation, the transceiver module is further configured to receive third information, where the third information indicates that the network device accepts the request for switching from the second mode to the first mode; and the processing module is specifically configured to perform cell access within the first time period in response to the third information.

In a possible implementation, the processing module is further configured to control the communication apparatus to enter a fourth mode, where the fourth mode is a mode in which no channel (for example, a PDCCH) is monitored.

In a possible implementation, the processing module is specifically configured to: control the transceiver module to receive, within the first time period, a signal (for example, including a downlink synchronization signal and a system message) for cell access; and perform cell access when the transceiver module receives the signal for cell access.

In a possible implementation, the processing module is further configured to control the communication apparatus to switch from the fourth mode to a third mode, where the fourth mode is a mode in which no channel (for example, a PDCCH) is monitored, and the third mode is a mode in which a channel is monitored.

In a possible implementation, the processing module is further configured to: start a timer based on the first information, where a timing duration of the timer is greater than or equal to a remaining duration of the second mode that the network device is currently in; and perform cell access after the timer expires.

In a possible implementation, the processing module is further configured to: when a first cell managed by the network device is accessed or camped on, switch the communication apparatus from the third mode to the fourth mode at a first time (a moment) determined based on the first information, where the second mode is a mode in which cell access is not supported, an operation performed in the third mode includes a first operation, an operation performed in the fourth mode does not include the first operation, and the first operation includes at least one of the following: monitoring a control channel, receiving a downlink signal, or sending an uplink signal.

In a possible implementation, the processing module is further configured to: when a first cell managed by the network device is accessed, switch the communication apparatus from a connected mode to an idle mode at a second time determined based on the first information, where the second mode is a mode in which cell access is not supported. For example, the second time is a moment that is determined based on the first information and at which the network device enters the second mode.

In a possible implementation, the processing module is further configured to: when a first cell managed by the network device is accessed, control the communication apparatus to hand over to a second cell before the network device enters the second mode, where the second cell is associated with a first network device different from the network device, and the second mode is a mode in which cell access is not supported.

In a possible implementation, the processing module is further configured to: when a first cell managed by the network device is accessed, perform a second operation or a third operation based on a type of a currently executed service, where the second operation includes performing cell handover before the network device enters the second mode, and the third operation includes camping on the first cell after the network device enters the second mode.

In a possible implementation, the processing module is specifically configured to: perform the second operation when the currently executed service has a continuity requirement; and/or perform the third operation when the currently executed service does not have a continuity requirement.

In a possible implementation, the processing module is further configured to: when the first cell managed by the network device is accessed, control the transceiver module to send an uplink signal by using a first resource when the network device is in the second mode, where the first resource is associated with a downlink synchronization signal, and the second mode is a mode in which cell access is not supported.

For possible implementations of the communication apparatus in the eighth aspect, refer to the possible implementations of the first aspect.

For technical effects brought by the possible implementations of the eighth aspect, refer to descriptions of the technical effects of the first aspect or the possible implementations of the first aspect.

According to a ninth aspect, an embodiment of this application provides a communication apparatus. The communication apparatus has a function of implementing behavior in the method embodiment of the second aspect. The communication apparatus may be a terminal device, or may be a component (for example, a processor, a chip, or a chip system) of the terminal device, or may be a logic module or software that can implement all or a part of functions of the terminal device. The function of the communication apparatus may be implemented by hardware, or may be implemented by hardware executing corresponding software. The hardware or the software includes one or more modules or units corresponding to the function. In a possible implementation, the communication apparatus includes a processing module. The processing module is configured to: when the communication apparatus accesses or camps on a first cell managed by a network device, control the communication apparatus to switch from a third mode to a fourth mode when the network device switches from a first mode to a second mode, where the first mode is a mode in which cell access is supported, the second mode is a mode in which cell access is not supported, an operation performed by the communication apparatus in the third mode includes a first operation, an operation performed by the communication apparatus in the fourth mode does not include the first operation, and the first operation includes at least one of the following: monitoring a control channel, receiving a downlink signal, or sending an uplink signal. Power consumption of the communication apparatus in the third mode is lower than that in the fourth mode.

According to a tenth aspect, an embodiment of this application provides a communication apparatus. The communication apparatus has a function of implementing behavior in the method embodiment of the third aspect. The communication apparatus may be a terminal device, or may be a component (for example, a processor, a chip, or a chip system) of the terminal device, or may be a logic module or software that can implement all or a part of functions of the terminal device. The function of the communication apparatus may be implemented by hardware, or may be implemented by hardware executing corresponding software. The hardware or the software includes one or more modules or units corresponding to the function. In a possible implementation, the communication apparatus includes a processing module. The processing module is configured to: when the communication apparatus accesses a first cell managed by a network device, control the communication apparatus to switch from a connected mode to an idle mode when the network device switches from a first mode to a second mode, where the first mode is a mode in which cell access is supported, and the second mode is a mode in which cell access is not supported.

According to an eleventh aspect, an embodiment of this application provides a communication apparatus. The communication apparatus has a function of implementing behavior in the method embodiment of the fourth aspect. The communication apparatus may be a terminal device, or may be a component (for example, a processor, a chip, or a chip system) of the terminal device, or may be a logic module or software that can implement all or a part of functions of the terminal device. The function of the communication apparatus may be implemented by hardware, or may be implemented by hardware executing corresponding software. The hardware or the software includes one or more modules or units corresponding to the function. In a possible implementation, the communication apparatus includes a processing module. The processing module is configured to: when the communication apparatus accesses a first cell managed by a network device, hand over to a second cell before the network device enters a second mode, where the second cell is associated with a first network device different from the network device, and the second mode is a mode in which cell access is not supported.

According to a twelfth aspect, an embodiment of this application provides a communication apparatus. The communication apparatus has a function of implementing behavior in the method embodiment of the fifth aspect. The communication apparatus may be a terminal device, or may be a component (for example, a processor, a chip, or a chip system) of the terminal device, or may be a logic module or software that can implement all or a part of functions of the terminal device. The function of the communication apparatus may be implemented by hardware, or may be implemented by hardware executing corresponding software. The hardware or the software includes one or more modules or units corresponding to the function. In a possible implementation, the communication apparatus includes a processing module. The processing module is configured to: when the communication apparatus accesses a first cell managed by a network device, perform a second operation or a third operation based on a type of a currently executed service, where the second operation includes performing cell handover before the network device enters a second mode, the third operation includes camping on the first cell after the network device enters the second mode, and the second mode is a mode in which cell access is not supported.

In a possible implementation, the processing module is specifically configured to: perform the second operation when the currently executed service has a continuity requirement; and/or perform the third operation when the currently executed service does not have a continuity requirement.

According to a thirteenth aspect, an embodiment of this application provides a communication apparatus. The communication apparatus has a function of implementing behavior in the method embodiment of the sixth aspect. The communication apparatus may be a terminal device, or may be a component (for example, a processor, a chip, or a chip system) of the terminal device, or may be a logic module or software that can implement all or a part of functions of the terminal device. The function of the communication apparatus may be implemented by hardware, or may be implemented by hardware executing corresponding software. The hardware or the software includes one or more modules or units corresponding to the function. In a possible implementation, the communication apparatus includes a processing module and a transceiver module. The processing module is configured to: when the communication apparatus accesses a first cell managed by a network device, send an uplink signal via the transceiver module by using a first resource when the network device is in a second mode, where the first resource is associated with a downlink synchronization signal, and the second mode is a mode in which cell access is not supported.

In a possible implementation of the ninth aspect to of the thirteenth aspect, the communication apparatus further includes a processing module; the transceiver module is configured to receive fourth information; and the processing module is further configured to determine, based on the fourth information, a time period during which the network device is in the first mode or the second mode.

For technical effects brought by possible implementations of the ninth aspect to the thirteenth aspect, refer to descriptions of the technical effects of the possible implementations of the third aspect to the seventh aspect.

According to a fourteenth aspect, an embodiment of this application provides a communication apparatus. The communication apparatus has a function of implementing behavior in the method embodiment of the seventh aspect. The communication apparatus may be a network device, or may be a component (for example, a processor, a chip, or a chip system) of the network device, or may be a logic module or software that can implement all or a part of functions of the network device. The function of the communication apparatus may be implemented by hardware, or may be implemented by hardware executing corresponding software. The hardware or the software includes one or more modules or units corresponding to the function. In a possible implementation, the communication apparatus includes a processing module and a transceiver module. The processing module is configured to determine first information, where the first information is used to determine a first time period, the first time period is a time period during which the network device is in a first mode, and the first mode is a mode in which cell access is supported. The transceiver module is configured to send the first information. The first mode may be a mode in which cell access of a communication apparatus is supported.

In a possible implementation, the transceiver module is specifically configured to send, in a first beam direction, a broadcast message including the first information.

In a possible implementation, the transceiver module is specifically configured to send the first information when the communication apparatus is in a second mode, where the second mode is a mode in which cell access is not supported.

In a possible implementation, the processing module is further configured to control the communication apparatus to switch from the second mode to the first mode when a start time of the first time period arrives, where the second mode is a mode in which cell access is not supported.

In a possible implementation, the processing module is further configured to control the communication apparatus to switch from the second mode to the first mode when the transceiver module receives second information within a second time period, where the second information is used to request the network device to switch from the second mode to the first mode, the first mode is a mode in which cell access is supported, the second mode is a mode in which cell access is not supported, and the second time period is determined based on a time at which the first information is sent.

In a possible implementation, the processing module is specifically configured to control the communication apparatus to switch from the second mode to the first mode when a start time of a third time period arrives, where the third time period is a time period during which the network device is in the first mode.

In a possible implementation, the processing module is further configured to perform a fourth operation within the third time period when the transceiver module receives no second information within the second time period, where the fourth operation does not include switching from the second mode to the first mode.

In a possible implementation, the processing module is specifically configured to control the communication apparatus to switch from the second mode to the first mode when a first start time arrives, where the first start time is related to a start time or an end time at which the second information is received.

In a possible implementation, the transceiver module is further configured to send a first downlink signal, where the first downlink signal is used for at least one of the following: determining that the network device is in the second mode, determining a time domain position at which the network device sends the first information, determining a frequency domain position at which the network device sends the first information, or performing downlink synchronization, the second mode is a mode in which cell access is not supported, there is an offset of f1 time units between a start time or an end time at which the first downlink signal is sent and a start time at which the first information is sent or received, f1 is an integer greater than 0, and a frequency domain position of the first downlink signal is related to the frequency domain position of the first information.

In a possible implementation, the transceiver module is further configured to: when the communication apparatus is in the second mode, receive an uplink signal carried on a first resource, where the first resource is associated with a downlink synchronization signal sent by the network device, and the second mode is a mode in which cell access is not supported.

For possible implementations of the communication apparatus in the fourteenth aspect, refer to the possible implementations of the seventh aspect.

For technical effects brought by the possible implementations of the fourteenth aspect, refer to descriptions of the technical effects of the seventh aspect or the possible implementations of the seventh aspect.

According to a fifteenth aspect, an embodiment of this application provides another communication apparatus. The communication apparatus includes one or more processors, and the one or more processors are configured to process data and/or signaling, so that the method in any one of the first aspect to the seventh aspect is implemented.

Optionally, the communication apparatus further includes a memory. The memory stores a computer program or instructions. When the computer program or the instructions are executed by the processor, the communication apparatus is enabled to perform the method in any one of the first aspect to the seventh aspect. For example, the communication apparatus may be a chip, the processor is a processing unit in the chip, and the memory is a random access memory or a buffer in the chip.

In this embodiment of this application, in a process of performing the method, a process of sending information (or a signal) in the method may be understood as a process of outputting the information based on a computer program or instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information to the processor. Further, after the transceiver receives the information, other processing may be performed on the information before the information is input into the processor.

Operations such as sending and/or receiving related to the processor may be generally understood as outputting based on a computer program or instructions of the processor, unless otherwise specified, or provided that the operations do not contradict actual functions or internal logic of the operations in related descriptions.

In an implementation process, the processor may be a processor specially configured to perform these methods, or may be a processor that executes a computer program or instructions in the memory to perform these methods, for example, a general-purpose processor. For example, the processor may be further configured to execute a program stored in the memory. When the program is executed, the communication apparatus is enabled to perform the method shown in any one of the first aspect or the possible implementations of the first aspect.

In a possible implementation, the memory is located outside the communication apparatus. In a possible implementation, the memory is located inside the communication apparatus.

In a possible implementation, the processor and the memory may alternatively be integrated into one component. In other words, the processor and the memory may alternatively be integrated together.

In a possible implementation, the communication apparatus further includes the transceiver. The transceiver is configured to receive signals, send signals, or the like.

According to a sixteenth aspect, this application provides another communication apparatus. The communication apparatus includes a processing circuit and an interface circuit. The interface circuit is configured to obtain data or output data. The processing circuit is configured to perform the method in any one of the first aspect to the seventh aspect.

According to a seventeenth aspect, this application provides a computer-readable storage medium. The computer-readable storage medium stores a computer program, the computer program includes program instructions, and when the program instructions are executed, a computer is enabled to perform the method in any one of the first aspect to the seventh aspect.

According to an eighteenth aspect, this application provides a computer program product. The computer program product includes a computer program, the computer program includes program instructions, and when the program instructions are executed, a computer is enabled to perform the method in any one of the first aspect to the seventh aspect.

According to a nineteenth aspect, this application provides a chip, including a communication interface and a processor. The communication interface is configured to receive and send signals for the chip. The processor is configured to execute a computer program or instructions, to enable a communication apparatus including the chip to perform the method in any one of the first aspect to the seventh aspect.

According to a twentieth aspect, an embodiment of this application provides a communication system, including the communication apparatus in any one of the eighth aspect or the possible implementations of the eighth aspect and the communication apparatus in any one of the fourteenth aspect or the possible implementations of the fourteenth aspect.

### BRIEF DESCRIPTION OF DRAWINGS

FIG. 1 is a diagram of a non-terrestrial network communication system to which a method according to an embodiment of this application may be applied;
FIG. 2a is a diagram of a satellite communication system in a transparent transmission scenario according to an embodiment of this application;
FIG. 2b is a diagram of a satellite communication system in a regeneration scenario according to an embodiment of this application;
FIG. 2c is a diagram of another satellite communication system in a regeneration scenario according to an embodiment of this application;
FIG. 3 is a flowchart of a communication method according to an embodiment of this application;
FIG. 4 is a diagram of switching between a first mode and a second mode by a network device according to an embodiment of this application;
FIG. 5 is a flowchart of another communication method according to an embodiment of this application;
FIG. 6 is a flowchart of another communication method according to an embodiment of this application;
FIG. 7 is a flowchart of another communication method according to an embodiment of this application;
FIG. 8 is a flowchart of another communication method according to an embodiment of this application;
FIG. 9 is a flowchart of another communication method according to an embodiment of this application;
FIG. 10 is a flowchart of another communication method according to an embodiment of this application;
FIG. 11 is a flowchart of another communication method according to an embodiment of this application;
FIG. 12 is a flowchart of another communication method according to an embodiment of this application;
FIG. 13 is a flowchart of another communication method according to an embodiment of this application;
FIG. 14 is a flowchart of another communication method according to an embodiment of this application;
FIG. 15 is a flowchart of another communication method according to an embodiment of this application;
FIG. 16 is a flowchart of another communication method according to an embodiment of this application;
FIG. 17 is a flowchart of another communication method according to an embodiment of this application;
FIG. 18 is a diagram of a structure of a communication apparatus 1800 according to an embodiment of this application;
FIG. 19 is a simplified diagram of a structure of a terminal device; and
FIG. 20 is a simplified diagram of a structure of a base station.

### DESCRIPTION OF EMBODIMENTS

In the specification, claims, and accompanying drawings of this application, terms such as "first" and "second" and various numbers (for example, "#1" and "#2") are merely used to distinguish between different objects, rather than indicate a specific sequence. It may be understood that various numbers in embodiments of this application are merely used for differentiation for ease of description, rather than limit the scope of embodiments of this application. Sequence numbers of the following processes do not mean a specific execution order. The execution order of the processes should be determined based on functions and internal logic of the processes, and should not constitute any limitation on implementation processes of embodiments of this application. In addition, terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

The "embodiment" mentioned in this specification means that specific features, structures, or characteristics described in combination with the embodiment may be included in at least one embodiment of this application. The phrase throughout the specification may not necessarily refer to a same embodiment, nor an independent or optional embodiment exclusive from another embodiment. It may be understood explicitly and implicitly by persons skilled in the art that the embodiments described herein may be combined with other embodiments. In this application, names of messages are merely used to distinguish between different messages, and should not be construed as limitations. In other words, a name of any message in this application may be replaced with another name. This is not limited in this application.

Terms used in the following embodiments of this application are merely intended to describe specific embodiments, rather than limit this application. As used in the specification and appended claims of this application, singular expressions "a", "an", "the", "said", and "this" are intended to also include plural expressions unless a context clearly indicates otherwise. It should also be understood that the term "and/or" used in this application means and includes any or all possible combinations of one or more listed items. For example, "A and/or B" may represent the following three cases: Only A exists, only B exists, and both A and B exist, where A and B may be singular or plural. The term "a/the plurality of" used in this application means two or more. In the text descriptions of this application, the character "/" generally indicates an "or" relationship between associated objects.

It may be understood that in embodiments of this application, "B corresponding to A" indicates that there is a correspondence between A and B, and B may be determined based on A. However, it should also be understood that determining (or generating) B according to (or based on) A does not mean that B is determined (or generated) only according to (or based on) A, but instead, B may be determined (or generated) according to (or based on) A and/or other information.

It should be understood that, in this application, indication includes direct indication (also referred to as explicit indication) and implicit indication. Directly indicating information A means including the information A. Implicitly indicating information A means indicating the information A by using a correspondence between the information A and information B and directly indicating the information B. The correspondence between the information A and the information B may be predefined, prestored, pre-burned, or preconfigured.

It should be understood that, in this application, information C being used to determine information D includes the information D being determined only based on the information C, and also includes the information D being determined based on the information C and other information. In addition, the information C being used to determine the information D may also include an indirect determining case. For example, the information D is determined based on information E, and the information E is determined based on the information C.

In embodiments of this application, words such as "example" or "for example" are used to represent giving an example, an illustration, or a description. Any embodiment or design scheme described as an "example" or "for example" in this application should not be explained as being more preferred or advantageous than another embodiment or design scheme. To be precise, use of the words such as "example" or "for example" is intended to present a relative concept in a specific manner.

In addition, in embodiments of this application, "a network element A sends information A to a network element B" may be understood as that a destination end of the information A or an intermediate network element in a transmission path to the destination end is the network element B, and may include directly or indirectly sending the information to the network element B; and "the network element B receives the information A from the network element A" may be understood as that a source end of the information A or an intermediate network element in a transmission path to the source end is the network element A, and may include directly or indirectly receiving the information from the network element A. Necessary processing, for example, a format change, may be performed on the information when the information is sent between the source end and the destination end, but the destination end can understand valid information from the source end. Similar descriptions in this application may be understood similarly, and details are not described herein.

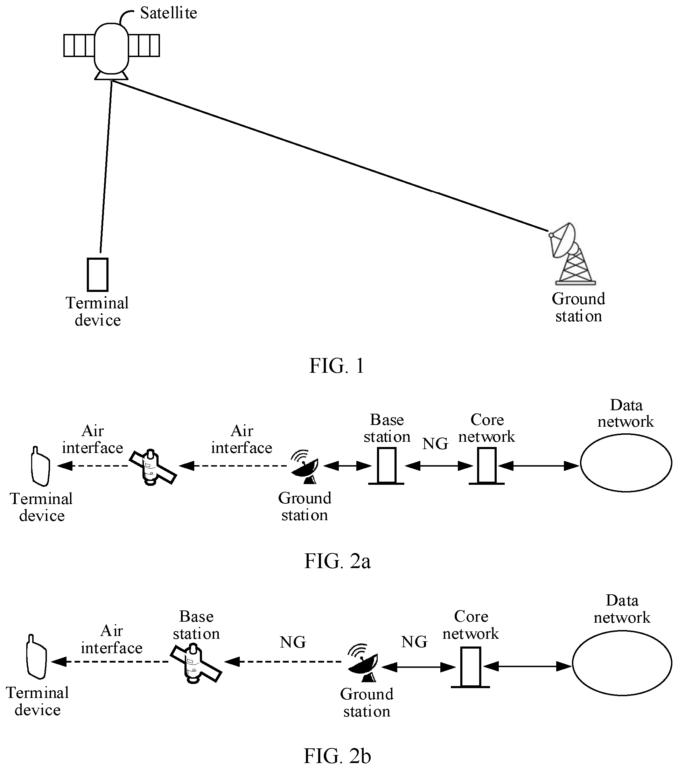

A method provided in embodiments of this application may be applied to a non-terrestrial network (non-terrestrial network, NTN) communication system. As shown in FIG. 1, the communication system may include a terminal device, a satellite, a ground station (which may also be referred to as a gateway station or a signal gateway station), and a base station (not shown). In a possible implementation, the base station is deployed on the satellite, the base station is connected to the ground station over a radio link, and the ground station is connected to a core network in a wired or wireless manner. In a possible implementation, the base station is deployed on the ground and connected to the ground station that communicates with the satellite (referring to the following FIG. 2a), the base station is connected to a core network in a wired or wireless manner, and the satellite has only a transparent forwarding function. In a possible implementation, a part of functions of the base station are deployed on the satellite, the base station is connected to the ground station over a radio link, and the ground station is connected to a core network in a wired or wireless manner. There may be a radio link between satellites. For example, if the satellites have only the transparent forwarding function (that is, corresponding base stations are deployed on the ground), only transparent forwarding is implemented between the satellites. For example, if base stations or a part of functions of the base stations are deployed on the satellites, signaling exchange and user data transmission between the base stations may be completed between the satellites. It may be understood that FIG. 1 shows only one satellite and one ground station. In actual use, an architecture with a plurality of satellites and/or a plurality of ground stations may be used as required. Each satellite may provide a service for one or more terminal devices, each satellite may correspond to one or more ground stations, each ground station may correspond to one or more satellites, and so on. This is not specifically limited in embodiments of this application. Each satellite may correspond to a plurality of beam directions, that is, messages are sent in a plurality of beam directions, and each beam direction corresponds to one terrestrial area (or coverage area). In a possible implementation, the satellite sends different messages in different beam directions. The messages sent by the satellite may be transparently forwarded, or may be sent by a base station deployed on the satellite. In other words, messages sent by the satellite in different beam directions may be independently controlled in a unit of a beam direction.

The method provided in embodiments of this application may also be applied to an internet of things (internet of things, IoT) system, an internet of vehicles (Vehicle to X, V2X) system, a narrowband internet of things (narrowband internet of things, NB-IoT) system, an LTE frequency division duplex (frequency division duplex, FDD) system, an LTE time division duplex (time division duplex, TDD) system, a long term evolution (long term evolution, LTE) system, a 5th-generation (5th-generation, 5G) communication system, or a future communication system. This is not specifically limited in embodiments of this application.

The terminal device is an apparatus having a wireless transceiver function. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor, outdoor, handheld, or vehicle-mounted terminal device; or may be deployed on water (for example, on a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5th-generation (5th-generation, 5G) network or a future network, or the like that has a wireless communication function. This is not limited in embodiments of this application. For example, communication may be further performed between terminal devices in device-to-device (device-to-device, D2D), machine-to-machine (machine-to-machine, M2M), or other modes. The terminal device shown in embodiments of this application may alternatively be a device in the internet of things (internet of things, IoT). The IoT network may include, for example, the internet of vehicles. Communication modes in the internet of vehicles system are collectively referred to as vehicle to X (vehicle to X, V2X, where X may represent anything). For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-vehicle, V2P) communication, vehicle-to-network (vehicle-to-network, V2N) communication, or the like.

The ground station may be configured to connect a satellite to a base station, or a satellite (for example, a base station is deployed) to a core network. The satellite may provide a radio access service for terminal devices, schedule radio resources to terminal devices that access the satellite, provide a reliable radio transmission protocol and data encryption protocol, and the like. In an example, the satellite may be an artificial earth satellite, a high-altitude aircraft, or the like that serves as a base station for wireless communication, for example, an evolved NodeB (evolved NodeB, eNB) and a next generation NodeB (next generation NodeB, gNB). In another example, the satellite may serve as a relay for these base stations, and transparently transmit signals of these base stations to terminal devices.

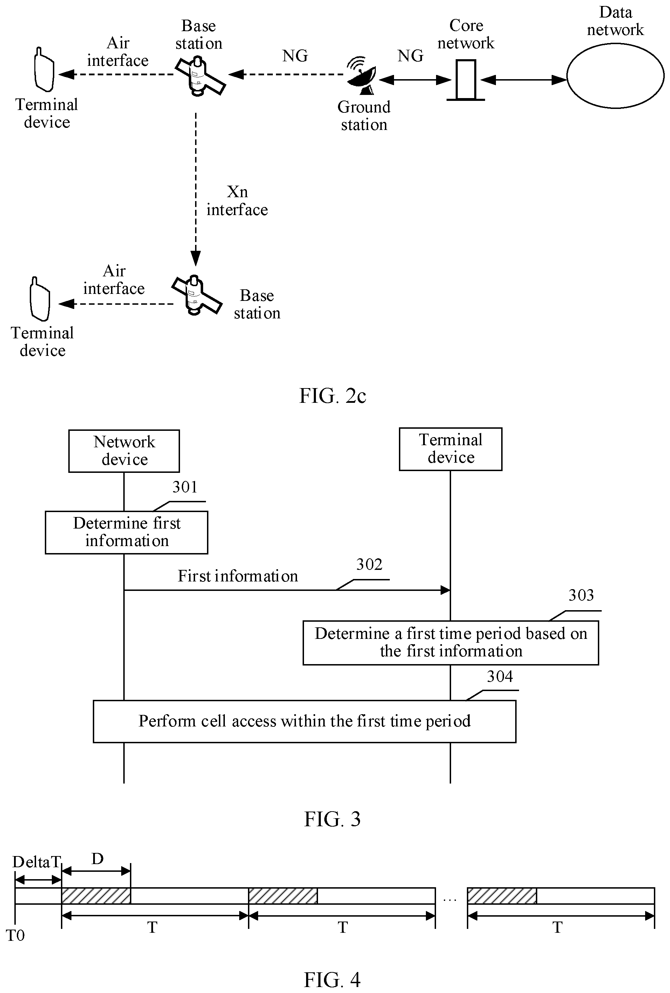

Therefore, in some implementations of this application, for example, in a scenario of transparent transmission of the satellite, a base station may be connected to the ground station shown in FIG. 1. FIG. 2a is a diagram of a satellite communication system in a transparent transmission scenario according to an embodiment of this application. As shown in FIG. 2a, a terminal device may access a network through an air interface (the air interface may be various types of air interfaces, for example, a 5G air interface), a satellite is connected to a ground station over a radio link, a base station is deployed on the ground and connected to a ground station that communicates with the satellite, the ground station is connected to a core network in a wired or wireless manner, and the core network is connected to a data network. There may be a radio link between satellites. In the system shown in FIG. 2a, the satellite may have a transparent forwarding function. FIG. 2b is a diagram of a satellite communication system in a regeneration scenario according to an embodiment of this application. FIG. 2c is a diagram of another satellite communication system in a regeneration scenario according to an embodiment of this application. As shown in FIG. 2b and FIG. 2c, a terminal device may access a network through an air interface (the air interface may be various types of air interfaces, for example, a 5G air interface). A base station may be deployed on a satellite (for example, in a regeneration mode of the satellite). For example, the base station or a part of functions of the base station are deployed on the satellite. The base station is connected to a ground station over a radio link, the ground station is connected to a core network in a wired or wireless manner, and the core network is connected to a data network. FIG. 2c shows that when base stations or a part of functions of the base stations are deployed on satellites, signaling exchange and user data transmission between the base stations may be completed between the satellites.

For example, network elements and interfaces between the network elements in FIG. 2a to FIG. 2c may be shown as follows:

The terminal device may access a satellite network through an air interface and initiates services such as calls and internet access. The base station may be configured to: provide a radio access service, schedule radio resources to terminal devices that access the base station, provide a reliable radio transmission protocol and data encryption protocol, and the like. The ground station may be configured to be responsible for forwarding signaling and service data between a satellite and a core network. The core network may be configured for user access control, mobility management, session management, user security authentication, charging, or the like. The core network may include a plurality of functional units, for example, control plane and data plane function entities. For example, the core network shown in FIG. 2a to FIG. 2c may include an access and mobility management function (access and mobility management function, AMF), a session management function (session management function, SMF), a user plane function (user plane function, UPF), and the like. For example, the AMF may be configured to be responsible for user access management, security authentication, mobility management, and the like. The UPF may be configured to be responsible for managing user plane data transmission, traffic statistics collection, and the like. The air interface shown in FIG. 2a to FIG. 2c may be understood as a radio link between the terminal and the base station, or a radio link between the satellite and the ground station. An Xn interface may be understood as an interface between base stations, and is mainly configured to exchange signaling for handover or the like. An NG interface may be used as an interface between the base station and the core network, and is configured to exchange signaling such as non-access stratum (non-access stratum, NAS) signaling of the core network and service data of users. In systems using different radio access technologies, names of devices having a base station function may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in non-geostationary earth orbit (non-geostationary earth orbit, NGEO) satellite, a high-altitude platform station (high-altitude platform station, HAPS), or the like. A specific type of the satellite is not limited in embodiments of this application.

In some deployments of the base station, the base station may include a central unit (central unit, CU) and a distributed unit (distributed unit, DU). In some other deployments of the base station, the CU may be further divided into a CU-control plane (control plane, CP) and a CU-user plane (user plane, UP). In some other deployments of the base station, the base station may be in an open radio access network (open radio access network, ORAN) architecture or the like. A specific deployment manner of the base station is not limited in embodiments of this application. In this application, the base station is an example of a network device, and the base station may be replaced with the network device. For example, when the base station is in the ORAN architecture, the network device in embodiments of this application may be an access network device, a functional module, or the like in the ORAN. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and so on. The deployment manners of the network device enumerated herein are merely examples. With evolution of standard technologies, the network device may have other deployment manners.

The network architectures and service scenarios described in embodiments of this application are intended to describe technical solutions in embodiments of this application more clearly, and do not constitute limitations on the technical solutions provided in embodiments of this application. Persons of ordinary skill in the art may know that with evolution of network architectures and emergence of new service scenarios, the technical solutions and network architectures provided in embodiments of this application are also applicable to similar technical problems.

As described in the background part, since satellites are powered by solar energy, network-side energy saving is significant for satellite communication. This application provides a technical solution that can reduce power consumption of a network side device (a base station deployed on a satellite or a satellite) in a non-terrestrial network communication scenario. A conception of the technical solution provided in this application is as follows: A network side device in a non-terrestrial network communication scenario switches between a first mode (a normal mode) and a second mode (a power saving mode) in some beam directions (for example, corresponding to no man's land or a terrestrial area with low access demand (for example, an access quantity within a duration is less than a threshold)). When the network side device is in the first mode, the network side device sends all system messages used by a terminal device to perform cell access, and the terminal device may access, when the network side device is in the first mode, a cell managed by the network side device. When the network side device is in the second mode, the network side device sends a part of system messages used by the terminal device to perform cell access or does not send a system message used by the terminal device to perform cell access. Power consumption in the second mode is lower than that in the first mode. The part of system messages used by the terminal device to perform cell access may carry access restriction information and/or uplink synchronization information. The access restriction information is used by the terminal device to determine whether the terminal device can access a cell managed by the network side device. The uplink synchronization information is used by the terminal device to perform uplink synchronization. For example, the access restriction information includes a country code. When the terminal device does not support a communication service provided by an operator corresponding to the country code, the terminal device determines not to access the cell managed by the network side device. In the beam direction corresponding to no man's land or the terrestrial area with low access demand, the network side device in the non-terrestrial network communication scenario switches between the first mode and the second mode, so that the terminal device can access, when the network side device is in the first mode, the cell managed by the network side device, and power consumption can be reduced.

FIG. 3 is a flowchart of a communication method according to an embodiment of this application. As shown in FIG. 3, the method includes the following steps.

301: A network device determines first information.

The network device may be a base station deployed on a satellite, referring to FIG. 2b or FIG. 2c; or may be a base station (referring to FIG. 2a) deployed on the ground and connected to a ground station that communicates with a satellite.

In a possible implementation, the network device determines a broadcast message including the first information. The first information is used to determine a first time period, the first time period is a time period during which the network device is in a first mode, and the first mode is a mode in which cell access is supported. In other words, the first information is used to determine a time period during which the network device is in the first mode. Because the network device switches between the first mode and a second mode, the first information used to determine the time period during which the network device is in the first mode can also be used to determine a time period during which the network device is in the second mode. The second mode is a mode in which cell access is not supported. In a possible implementation, the broadcast message may further carry information used by a terminal device to obtain uplink synchronization information. For example, the network device is a base station deployed on a non-terrestrial network device (for example, a satellite), and the broadcast message including the first information may be generated and sent by the non-terrestrial network device (for example, the satellite). For example, the network device is a base station deployed on the ground and connected to a ground station that communicates with a non-terrestrial network device (for example, a satellite), and the broadcast message that is generated by the network device and includes the first information is transparently forwarded by the non-terrestrial network device via the ground station.

302: The network device sends the first information.

Correspondingly, one or more terminal devices receive the first information. In this embodiment of this application, an example in which one terminal device receives the first information is used for description. For example, the one or more terminal devices receive the broadcast message including the first information. In a possible implementation, the network device sends the first information in a first beam direction, and there is low access demand (for example, an access quantity within a duration is less than a threshold) in a terrestrial area corresponding to the first beam direction. In other words, the first beam direction corresponds to a terrestrial area with low access demand. A criterion for a terrestrial area with low access demand may be set based on an actual requirement. This is not limited in this application. For example, the network device uses a terrestrial area that corresponds to a beam direction and whose population density is lower than a threshold as a terrestrial area with low access demand. The threshold may be set as required. For another example, if an average value of a total quantity of access requests sent by terminal devices within h hours in a terrestrial area corresponding to a beam direction is less than a threshold, the terrestrial area corresponding to the beam direction is used as a terrestrial area with low access demand, where h is a real number greater than 0. In a possible implementation, a plurality of beam directions (including the first beam direction) of the network device correspond to terrestrial areas with low access demand, and message exchange between the network device and terminal devices in the beam directions is similar. In this application, the first beam direction is used as an example for description. For example, the network device switches between the first mode and the second mode in the plurality of beam directions corresponding to the terrestrial areas with low access demand, and a switching time point and/or duration ratio between the two modes may vary in different beam directions. For example, a ratio of a duration of the network device in the first mode to a duration of the network device in the second mode in the first beam direction is less than a ratio of a duration of the network device in the first mode to a duration of the network device in the second mode in a second beam direction, and access demand in a terrestrial area corresponding to the first beam direction is greater than access demand in a terrestrial area corresponding to the second beam direction.

In this application, that the network device switches between the first mode and the second mode means that the network device switches between the first mode and the second mode in a beam direction (corresponding to a terrestrial area with low access demand). In this application, mode switching is performed in a unit of a beam direction. In this application, that the network device is in the first mode or the second mode means that the network device is in the first mode or the second mode in a beam direction (for example, the first beam direction). That the network device is in the first mode in the beam direction means that the network device sends, in the beam direction, all system messages used by a terminal device to perform cell access. That the network device is in the second mode in the beam direction means that the network device does not send, in the beam direction, a system message used by the terminal device to perform cell access, or sends, in the beam direction, a part of system messages used by the terminal device to perform cell access. In this application, that the network device switches from the first mode to the second mode means that the network device switches from the first mode to the second mode in a beam direction. In this application, that the network device switches from the second mode to the first mode means that the network device switches from the second mode to the first mode in a beam direction. In this application, that the network device enters the first mode or the second mode means that the network device enters the first mode or the second mode in a beam direction.

In a possible implementation, when the network device is in the second mode, the network device sends the first information in the first beam direction. The second mode is a mode in which cell access is not supported. For example, the second mode is a mode in which the network device sends a part of system messages for cell access or a mode in which the network device does not send a system message for cell access. For example, operating modes of the network device (for example, a base station) include the first mode and the second mode. In the first mode, the network device sends all system messages used by the communication apparatus to perform cell access. In the second mode, the network device does not send any system message used by the communication apparatus to perform cell access or sends a part of system messages used by the communication apparatus to perform cell access. Fewer messages are sent and less power is consumed in the second mode than the first mode. In this implementation, the network device sends the first information in the second mode. After the terminal device receives the first information, before a start time of the first time period (that is, the network device enters the first mode), the terminal device does not perform cell access, that is, there is no need to monitor a channel and/or receive a downlink signal. In this way, power consumption can be reduced.

303: The terminal device determines the first time period based on the first information.

In a possible implementation, the first information (which may be named inactivity information) indicates at least one of the following: a remaining duration of the network device in the second mode, a duration of the network device in the second mode, a periodicity of the network device in the second mode, a duration of the network device in the first mode, or a periodicity of the network device in the first mode, and the second mode is a mode in which cell access is not supported. The periodicity of the network device in the first mode may be equal to the periodicity of the network device in the second mode. The periodicity of the network device in the first mode may be equal to a sum of the duration of the network device in the first mode and the duration of the network device in the second mode. For example, the first information indicates the remaining duration of the network device in the second mode, and a duration of the first time period may be a preset duration, for example, 100 ms, 1s, 5s, 10s, 1 min, or 5 min. In this example, the terminal device may determine that a moment #1 after the remaining duration elapses since a current moment is the start time of the first time period, and determine that a moment #2 after the preset duration elapses since the moment #1 is an end time of the first time period.

For example, the first information indicates the periodicity, the remaining duration, and the duration of the network device in the second mode. For example, the first information indicates the remaining duration of the network device in the second mode, the duration of the network device in the first mode, and the periodicity of the network device in the first mode. For example, the remaining duration of the network device in the second mode is DeltaT, the duration of the network device in the first mode is D, and the periodicity of the network device in the first mode is T. Assuming that the current moment is T0, based on the first information, a time period (that is, the first time period) during which the network device may be in the first mode includes: [T0, T0+DeltaT], and [T0+DeltaT+D, T0+DeltaT+T]+K*T (K=0, 1, 2...). FIG. 4 is a diagram of switching between the first mode and the second mode by the network device according to an embodiment of this application. As shown in FIG. 4, T0 represents the current moment, DeltaT represents the remaining duration of the network device in the second mode, D represents the duration of the network device in the first mode, T represents the periodicity of the network device in the first mode, a time indicated by a rectangle filled with slashes is a time during which the network device is in the first mode, and a time indicated by a rectangle not filled with slashes is a time during which the network device is in the second mode.

304: The terminal device performs cell access within the first time period.

In a possible implementation, the terminal device receives, within the first time period, a signal (for example, including a downlink synchronization signal and a system message) for cell access, and performs cell access, that is, accesses a cell managed by the network device, when the signal for cell access is received. It should be understood that if no signal for cell access is received within the first time period, cell access is not performed. For example, the terminal device starts to monitor a channel, for example, a PDCCH channel, that is, receive a signal for cell access, from the start time of the first time period. In this implementation, a signal for cell access is received within the first time period, to perform cell access by using the received signal for cell access.

In a possible implementation, the first information indicates the remaining duration of the network device in the second mode; and before performing cell access within the first time period, the terminal device starts a timer based on the first information, where a timing duration of the timer is greater than or equal to the remaining duration of the second mode that the network device is currently in. That the terminal device performs cell access within the first time period may be performing cell access after the timer expires. In this implementation, after the timer expires, the terminal device performs cell access to access, in time, a cell managed by the network device. In a possible implementation, after starting the timer and before the timer expires, the terminal device enters a fourth mode (or power saving mode). The fourth mode is a mode in which no channel (for example, a PDCCH) is monitored. In this way, power consumption can be reduced. The entering the fourth mode may be disabling a receiver (corresponding to a receiving module or a receiver machine), or may be disabling a transceiver module (which may include a sending module and a receiving module), or may be disabling a transceiver (which may include a transmitter and a receiver). In a possible implementation, after the timer expires, the terminal device switches from the fourth mode to a third mode. The third mode is a mode in which a channel is monitored. In this way, cell access can be performed. The switching from the fourth mode to the third mode may be starting the receiver, or may be starting the transceiver module, or may be starting the transceiver.

In this embodiment of this application, cell access is performed within the first time period, and no cell access is performed from the time the first information is received until a start time of the first time period, eliminating the need to monitor a channel and/or receive a downlink signal, thereby reducing power consumption. Because the first time period is a time period during which the network device is in the first mode, performing cell access within the first time period enables successful access to a cell managed by the network device.

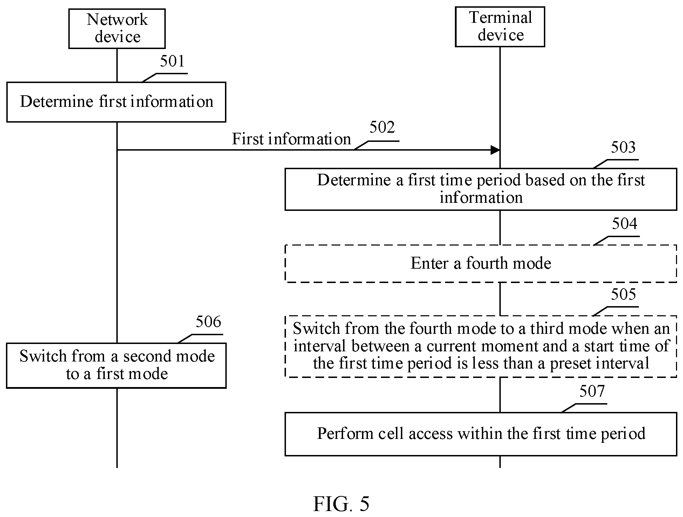

FIG. 5 is a flowchart of another communication method according to an embodiment of this application. The method procedure in FIG. 5 is a possible implementation of the method described in FIG. 3. As shown in FIG. 5, the method includes the following steps.

501: A network device determines first information.

502: The network device sends the first information.

Correspondingly, one or more terminal devices receive the first information.

503: The terminal device determines a first time period based on the first information.

For step 501 to step 503, refer to step 301 to step 303 in FIG. 3.

504: The terminal device enters a fourth mode.

In a possible implementation, the terminal device switches to (enters) the fourth mode from a third mode. The third mode is a mode in which a channel is monitored. The fourth mode is a mode in which no channel is monitored. For example, an operation performed by the communication apparatus in the fourth mode does not include a first operation, and the first operation includes at least one of the following: monitoring a control channel, receiving a downlink signal, or sending an uplink signal. For descriptions of entering the fourth mode, refer to related descriptions in the embodiment of FIG. 3. After determining the first time period based on the first information, the terminal device enters the fourth mode, so that power consumption can be reduced.

505: The terminal device switches from the fourth mode to the third mode when an interval between a current moment and a start time of the first time period is less than a preset interval.

The preset interval may be 50 µs, 100 µs, 1 ms, 2 ms, 5 ms, 10 ms, or the like. This is not limited in this application. Step 504 and step 506 are optional.

506: The network device switches from a second mode to a first mode.

In a possible implementation, the network device switches from the second mode to the first mode at a start moment of the first time period. In a possible implementation, the network device switches from the second mode to the first mode at a moment #1 before the start moment of the first time period, and an interval between the moment #1 and the start moment of the first time period is less than 50 µs, 100 µs, 1 ms, 2 ms, 5 ms, 10 ms, or the like. After entering the first mode, the network device may send all system messages used by the terminal device to perform cell access. The network device is in the first mode within the first time period. In a possible implementation, the network device periodically switches between the first mode and the second mode, referring to FIG. 4. It is noted herein and applies throughout that a sequence of steps performed by the network device and steps performed by the terminal device is not limited.

507: The terminal device performs cell access within the first time period.

In this embodiment of this application, the network device switches between the first mode and the second mode, and after the network device switches from the second mode to the first mode, the terminal device may perform cell access to access a cell managed by the network device. In this way, the terminal device can access the cell managed by the network device, and power consumption can be reduced.

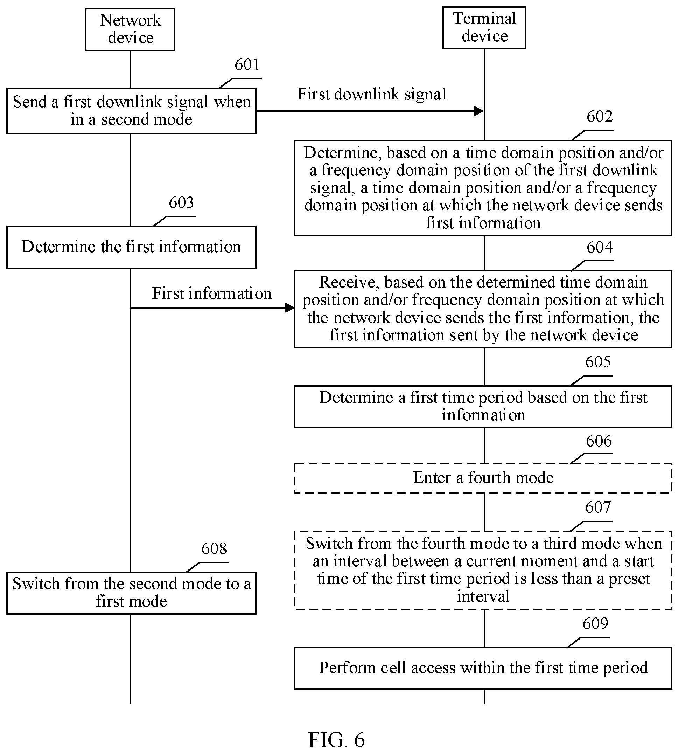

FIG. 6 is a flowchart of another communication method according to an embodiment of this application. The method procedure in FIG. 6 is a possible implementation of the method described in FIG. 5. As shown in FIG. 6, the method includes the following steps.

601: When a network device is in a second mode, the network device sends a first downlink signal.

Correspondingly, one or more terminal devices receive the first downlink signal. In this application, an example in which one terminal device receives the first downlink signal is used for description. The first downlink signal may be a downlink synchronization signal. In a possible implementation, the first downlink signal includes one of a primary synchronization signal (primary synchronization signal, PSS) and a secondary synchronization signal (secondary synchronization signal, SSS). The terminal device may determine, based on the first downlink signal, that the network device is in the second mode.

602: The terminal device determines, based on a time domain position and/or a frequency domain position of the first downlink signal, a time domain position and/or a frequency domain position at which the network device sends first information.

In a possible implementation, there is an offset of f1 time units between a start time or an end time at which the first downlink signal is received and a start time at which the first information is sent or received, and f1 is an integer greater than 0. The frequency domain position of the first downlink signal is related to the frequency domain position of the first information. For example, there is an offset of p resource blocks (resource blocks, RBs) or subcarriers between the frequency domain position of the first downlink signal and the frequency domain position of the first information. The time domain position and/or the frequency domain position at which the network device sends the first information are/is determined based on the time domain position and/or the frequency domain position of the first downlink signal, to subsequently better receive the first information. For example, the time domain position of the first downlink signal is a time domain position of the PSS or a time domain position of the SSS.

In a possible implementation, after determining the time domain position and/or the frequency domain position at which the network device sends the first information, the terminal device enters a fourth mode before a current moment arrives at the time domain position at which the network device sends the first information, where the fourth mode is a mode in which no channel (for example, a PDCCH) is monitored; and when the current moment arrives at the time domain position at which the network device sends the first information, the terminal device enters a third mode, that is, monitors a channel. In this implementation, before the time domain position at which the network device sends the first information arrives, the fourth mode is entered, so that power consumption can be reduced.

603: The network device determines the first information.

604: The terminal device receives, based on the determined time domain position and/or frequency domain position at which the network device sends the first information, the first information sent by the network device.

The first information sent by the network device may be received by one or more terminal devices.

605: The terminal device determines a first time period based on the first information.

606: The terminal device enters the fourth mode.

607: When an interval between a current moment and a start time of the first time period is less than a preset interval, the terminal device switches from the fourth mode to the third mode.

608: The network device switches from a second mode to a first mode.

609: The terminal device performs cell access within the first time period.

For step 605 to step 609, refer to step 503 to step 507 in FIG. 5.

In this embodiment of this application, the terminal device receives, based on the determined time domain position and/or frequency domain position at which the network device sends the first information, the first information sent by the network device, so that the first information can be better received. In addition, the network device switches between the first mode and the second mode, and after the network device switches from the second mode to the first mode, the terminal device may perform cell access to access a cell managed by the network device. In this way, the terminal device can access the cell managed by the network device, and power consumption can be reduced.

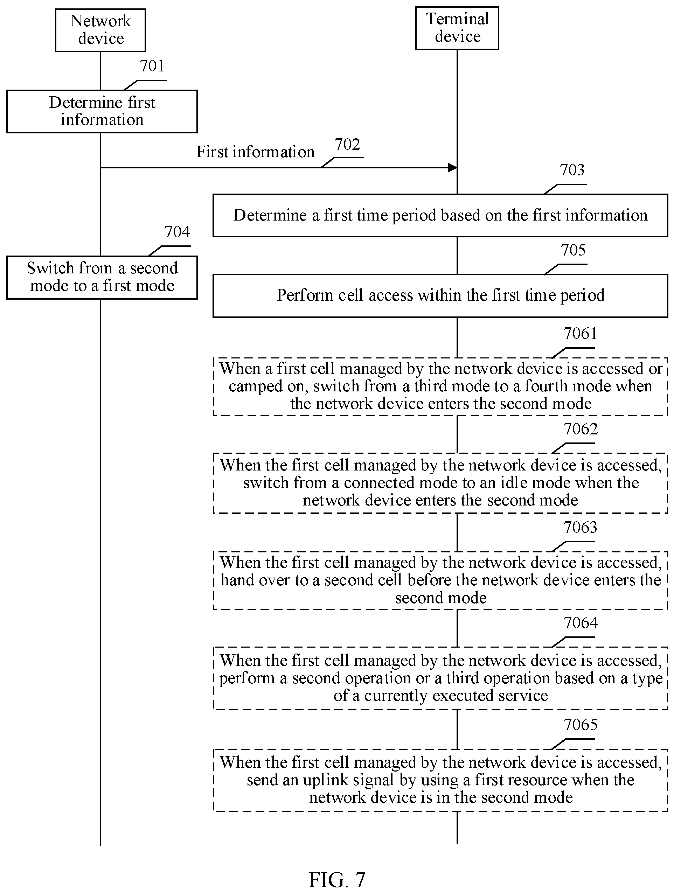

FIG. 7 is a flowchart of another communication method according to an embodiment of this application. The method procedure in FIG. 7 is a possible implementation of the method described in FIG. 3. As shown in FIG. 7, the method includes the following steps.

701: A network device determines first information.

702: The network device sends the first information.

703: A terminal device determines a first time period based on the first information.

For step 701 to step 703, refer to step 301 to step 303 in FIG. 3.

704: The network device switches from a second mode to a first mode.

For step 704, refer to step 506 in FIG. 6.

705: The terminal device performs cell access within the first time period.

In a possible implementation, step 701 to step 705 in FIG. 7 may be replaced with step 501 to step 507 in FIG. 5, or may be replaced with step 601 to step 609 in FIG. 6.

7061: When the terminal device accesses or camps on a first cell managed by the network device, the terminal device switches from a third mode to a fourth mode when the network device enters the second mode.

The second mode is a mode in which cell access is not supported. An operation performed by the terminal device in the third mode includes a first operation, an operation performed by the terminal device in the fourth mode does not include the first operation, and the first operation includes at least one of the following: monitoring a control channel, receiving a downlink signal, or sending an uplink signal. For example, the fourth mode is a sleep state of a discontinuous reception (discontinuous reception, DRX) mode of the terminal device, and the third mode is an active state of the DRX mode of the terminal device. For a possible implementation in which the terminal device switches from the third mode to the fourth mode (that is, enters the fourth mode), refer to related descriptions in the embodiment of FIG. 3.

In a possible implementation, if the DRX mode (that is, a terminal device-level DRX state) has been configured for the terminal device, a state of the DRX mode is determined based on states originally configured for the DRX mode and a mode in which the network device is located. For example, if the network device enters the second mode when the DRX mode of the terminal device is in the active state, the active state of the DRX mode within this period is covered by the second mode of the network device, that is, the DRX mode of the terminal device enters the sleep state from the active state. That the DRX mode of the terminal device enters the sleep state from the active state is an example in which the terminal device switches from the third mode to the fourth mode.

In a possible implementation, when the terminal device accesses or camps on the first cell managed by the network device, when the network device switches from the second mode to the first mode, the terminal device switches from the fourth mode to the third mode, to exchange information with the network device.

7062: When the terminal device accesses the first cell managed by the network device, the terminal device switches from a connected mode to an idle mode when the network device enters the second mode.

When the network device enters the second mode, the terminal device switches from the connected mode to the idle mode, so that power consumption can be reduced. After switching to the idle mode, the terminal device may subsequently re-access a cell managed by the network device.

7063: When the network device accesses the first cell managed by the network device, the terminal device hands over to a second cell before the network device enters the second mode.

The network device is different from a network device associated with the second cell, and the second mode is a mode in which cell access is not supported. In a possible implementation, the network device enters the second mode (power saving mode) at different time for different beam directions. Terminal devices in the different beam directions may start to measure reference signals of neighboring cells based on the time at which the network device enters the second mode in the beam directions. The terminal devices in the different beam directions may hand over to a cell managed by another network device (for example, a satellite) at different time. Before the network device enters the second mode, the terminal device hands over to the second cell, so that service continuity can be ensured.

7064: When the terminal device accesses the first cell managed by the network device, the terminal device performs a second operation or a third operation based on a type of a currently executed service.

The second operation includes performing cell handover before the network device enters the second mode. The third operation includes camping on the first cell after the network device enters the second mode. In a possible implementation, the third operation further includes that the terminal device enters the fourth mode. In this way, power consumption can be further reduced. After the network device switches from the second mode to the first mode, the terminal device may switch from the fourth mode to the third mode.

In a possible implementation, the performing the second operation or the third operation based on the type of the currently executed service includes: performing the second operation when the currently executed service has a continuity requirement; and/or performing the third operation when the currently executed service does not have a continuity requirement. In this implementation, when the currently executed service has a continuity requirement, the second operation is performed to hand over to the second cell, so that the continuity requirement of the service can be met. When the currently executed service does not have a continuity requirement, the third operation is performed, so that unnecessary operations can be reduced, and power consumption can be reduced.

7065: When the terminal device accesses the first cell managed by the network device, the terminal device sends an uplink signal by using a first resource when the network device is in the second mode.

Correspondingly, the network device receives the uplink signal. In a possible implementation, when the network device is in the second mode, the network device receives the uplink signal sent by the terminal device by using the first resource. For example, when the network device is in the second mode, the network device receives an uplink signal only at a time-frequency position corresponding to the first resource. In this way, power consumption can be reduced, and an opportunity is reserved for the terminal device to send the uplink signal in the second mode.

The first resource is associated with a downlink synchronization signal. In other words, the first resource is a resource associated with a downlink synchronization signal. The terminal device may determine the first resource based on the downlink synchronization signal. For example, a time domain resource of the first resource is a first uplink time unit (including one or more time units) after a first downlink time unit (for example, a subframe or a slot) corresponding to the downlink synchronization signal, there is an interval of h time units between the first uplink time unit and the first downlink time unit, and h is a predefined integer; and a frequency domain resource of the first resource is predefined or there is an offset of g RBs or subcarriers between the frequency domain resource of the first resource and a frequency domain resource of the downlink synchronization signal, and g is a predefined integer. The second mode is a mode in which cell access is not supported. The first resource may be a resource reserved by the network device for the terminal device in the connected mode to send an uplink signal when the network device is in the second mode. In a possible implementation, the uplink signal is sent based on synchronization information by using the first resource. The synchronization information is obtained based on a message sent by the network device in the second mode. For example, the first information further includes the synchronization information. For another example, the synchronization information is obtained based on a broadcast message sent by the network device in the second mode, and the broadcast message may include the first information, or may not include the first information. Alternatively, the synchronization information is obtained based on a message sent by the network device in the first mode. For example, if the network device does not broadcast, in the second mode, a message for synchronization, the terminal device may obtain ephemeris or other information before the network device enters the second mode, and the information is still valid when the network device is in the second mode.

Step 7061 to step 7065 describe operations that may be performed by the terminal device after or before the network device enters the second mode when the terminal device accesses or camps on the first cell managed by the network device. Step 7061 to step 7065 are five parallel solutions. In other words, the five steps are parallel. The method procedure in FIG. 7 includes any one of step 7061 to step 7065.

This embodiment of this application describes the operations that may be performed by the terminal device after or before the network device enters the second mode when the terminal device accesses or camps on the first cell managed by the network device, and these operations can reduce power consumption or meet a service requirement of the terminal device. The network device switches between the first mode and the second mode, and after the network device switches from the second mode to the first mode, the terminal device may perform cell access to access a cell managed by the network device. In this way, the terminal device can access the cell managed by the network device, and power consumption can be reduced.

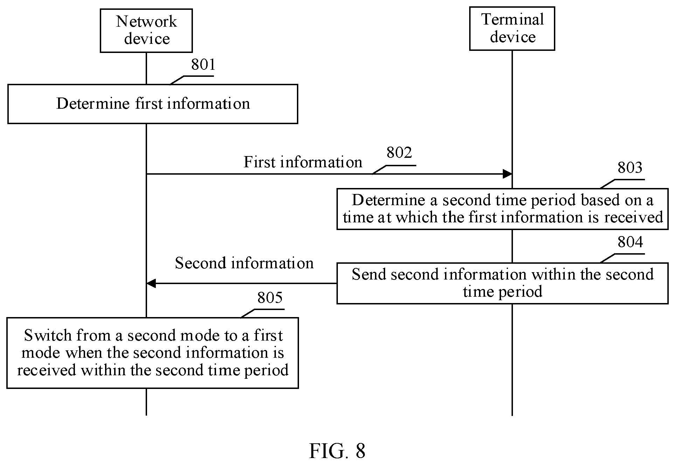

FIG. 8 is a flowchart of another communication method according to an embodiment of this application. Different from the method procedure in FIG. 3, in the method procedure in FIG. 8, the terminal device sends, to the network device, a message used to request the network device to switch from the second mode to the first mode. As shown in FIG. 8, the method includes the following steps.

801: A network device determines first information.

802: The network device sends the first information.

For step 801 to step 802, refer to step 301 to step 302 in FIG. 3.

803: A terminal device determines a second time period based on a time at which the first information is received.

The second time period is a time period during which the network device receives an uplink signal. A duration of the second time period may be predefined. The second time period may be a time period during which the network device receives an uplink signal when the network device is in a second mode. For example, when the network device is in the second mode, the network device receives an uplink signal only within the second time period. The second mode may be a mode in which cell access is not supported.

In a possible implementation, there is an offset of f2 time units between a start time of the second time period and the time at which the terminal device receives the first information, and f2 is an integer greater than 0. For example, the time at which the terminal device receives the first information may be a time at which a broadcast message including the first information is received. In this application, the time unit may be a slot, a subframe, a mini-slot, or the like. This is not limited in this application. In a possible implementation, the network device determines the start time of the second time period based on a time at which the first information is sent. For example, there is an offset of f3 time units between a start time or an end time at which the network device sends the first information and the start time of the second time period, and f3 is an integer greater than 0. f2 and f3 may be set based on an actual requirement, so that the start time of the second time period determined by the network device is the same as that determined by the terminal device. In a possible implementation, the network device preconfigures a second time period used to receive an uplink signal, and the terminal device determines the second time period based on the time at which the first information is received.

804: The terminal device sends second information within the second time period.

Correspondingly, the network device receives the second information. The second information is used to request the network device to switch from the second mode to a first mode. The first mode is a mode in which cell access is supported. For example, the second information is used to request the network device to switch from the second mode to the first mode in a first beam direction. The terminal device is located in a terrestrial area corresponding to the first beam direction.

805: The network device switches from the second mode to the first mode when the network device receives the second information within the second time period.

If the network device receives no second information within the second time period, the network device stays in the second mode, that is, does not need to switch from the second mode to the first mode.

In this embodiment of this application, the second information may be sent within the second time period to request the network device to switch from the second mode to the first mode, so as to access a cell managed by the network device.

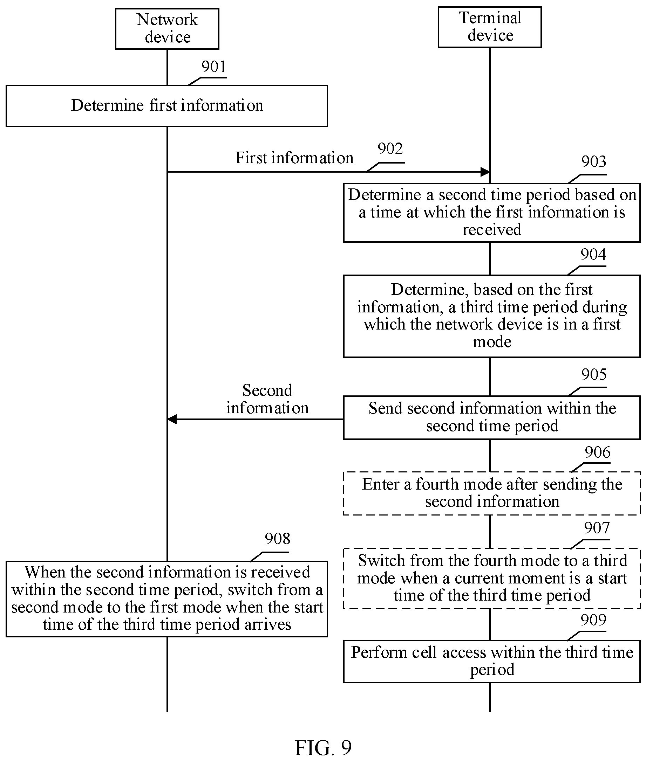

FIG. 9 is a flowchart of another communication method according to an embodiment of this application. The method procedure in FIG. 9 is a possible implementation of the method described in FIG. 8. As shown in FIG. 9, the method includes the following steps.

901: A network device determines first information.

In a possible implementation, the method procedure in FIG. 9 may further include step 601 and step 602 in FIG. 6. For example, both step 601 and step 602 are performed before step 901.

902: The network device sends the first information.

Correspondingly, a terminal device receives the first information. In a possible implementation, when the terminal device accesses no cell managed by the network device, the terminal device receives a broadcast message including the first information.

903: The terminal device determines a second time period based on a time at which the first information is received.

For step 901 to step 903, refer to step 801 to step 803 in FIG. 8.

904: The terminal device determines, based on the first information, a third time period during which the network device is in a first mode.

A sequence of step 904 and step 903 is not limited. The first information is used to determine a time period during which the network device is in the first mode. In a possible implementation, the first information indicates at least one of the following: a remaining duration of the network device in a second mode, a duration of the network device in the second mode, a periodicity of the network device in the second mode, a duration of the network device in the first mode, or a periodicity of the network device in the first mode, and the second mode is a mode in which cell access is not supported. In this implementation, the third time period during which the network device is in the first mode may be determined based on the first information, to perform cell access within the third time period.

905: The terminal device sends second information within the second time period.

906: The terminal device enters a fourth mode after sending the second information.

The fourth mode is a mode in which no channel (for example, a PDCCH) is monitored. For example, an operation performed by the communication apparatus in the fourth mode does not include a first operation, and the first operation includes at least one of the following: monitoring a control channel, receiving a downlink signal, or sending an uplink signal. After sending the second information, the terminal device enters the fourth mode, so that power consumption can be reduced.

907: The terminal device switches from the fourth mode to a third mode when a current moment is a start time of the third time period.

The third mode is a mode in which a channel is monitored. Step 906 and step 907 are optional. When the current moment is the start time of the third time period, the terminal device switches from the fourth mode to the third mode to perform cell access. In addition, before the start time of the third time period, the terminal device is in the fourth mode, so that power consumption can be reduced. In this application, that the current moment is a start time of a time period may be that the current moment is the same as the start time of the time period, or may allow a little error between the current moment and the start time of the time period, for example, 100 µs or 1 ms.

908: When the network device receives the second information within the second time period, the network device switches from the second mode to the first mode when the start time of the third time period arrives.

The second information is used to request the network device to switch from the second mode to the first mode. The first mode is a mode in which cell access is supported. The second mode is a mode in which cell access is not supported. The third time period is a time period during which the network device is in the first mode. In a possible implementation, the network device may determine a start time of the second time period based on a time at which the first information is sent. For example, there is an offset of f3 time units between a start time or an end time at which the network device sends the first information and the start time of the second time period, and f3 is an integer greater than 0. f2 and f3 may be set based on an actual requirement, so that the start time of the second time period determined by the network device is the same as that determined by the terminal device. In a possible implementation, the network device preconfigures a second time period used to receive an uplink signal, and the terminal device determines the second time period based on the time at which the first information is received. In this application, that start time of a time period arrives may be that the current moment is the same as the start time of the time period, or may allow a little error between the current moment and the start time of the time period, for example, 100 µs or 1 ms.

909: The terminal device performs cell access within the third time period.

In a possible implementation, the terminal device receives, within the third time period, a signal (for example, including a downlink synchronization signal and a system message) for cell access, and performs cell access when the signal for cell access is received. It should be understood that if no signal for cell access is received within the third time period, cell access is not performed. In this implementation, a signal for cell access is received within the third time period, to perform cell access by using the received signal for cell access.

In a possible implementation, the terminal device receives third information before performing cell access within the third time period, and the third information indicates that the network device accepts the request for switching from the second mode to the first mode. That the terminal device performs cell access within the third time period may be as follows: The terminal device performs cell access within the third time period in response to the third information. In this implementation, in response to the third information, cell access is performed within the third time period to successfully access a cell managed by the network device.

In a possible implementation, the first information indicates the remaining duration of the network device in the second mode; before performing cell access within the third time period, the terminal device performs the following operation: starting a timer based on the first information, where a timing duration of the timer is greater than or equal to the remaining duration of the second mode that the network device is currently in; and that the terminal device performs cell access within the third time period may be performing cell access after the timer expires. For example, after sending the second information within the second time period, the terminal device starts the timer based on the first information, and enters the fourth mode; and after the timer expires, the terminal device switches from the fourth mode to the third mode, and performs cell access, so that power consumption can be reduced. In this implementation, after the timer expires, cell access is performed to access, in time, a cell managed by the network device.

In this embodiment of this application, when the network device receives the second information within the second time period, the network device switches from the second mode to the first mode, so that the communication apparatus (or terminal device) can access, in time, a cell managed by the network device.

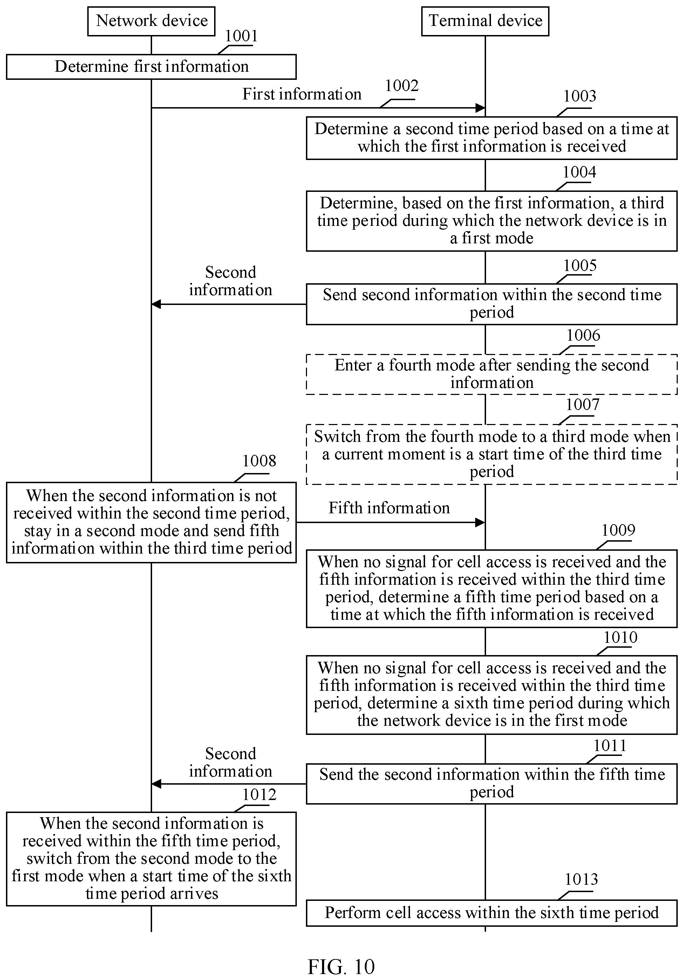

FIG. 10 is a flowchart of another communication method according to an embodiment of this application. The method procedure in FIG. 10 is a possible implementation of the method described in FIG. 8. As shown in FIG. 10, the method includes the following steps.

1001: A network device determines first information.

1002: The network device sends the first information.

1003: A terminal device determines a second time period based on a time at which the first information is received.

1004: The terminal device determines, based on the first information, a third time period during which the network device is in a first mode.

1005: The terminal device sends second information within the second time period.

1006: The terminal device enters a fourth mode after sending the second information.

1007: The terminal device switches from the fourth mode to a third mode when a current moment is a start time of the third time period.

For step 1001 to step 1007, refer to step 901 to step 907 in FIG. 9.

1008: When the network device receives no second information within the second time period, the network device stays in a second mode and sends fifth information within the third time period.

The fifth information is similar to the first information. In a possible implementation, the fifth information is included in a broadcast message. The fifth information is used by the terminal device to determine a time period during which the network device is in the first mode, and a time period for sending, to the network device, information used to request the network device to switch from the second mode to the first mode. Step 1008 may be replaced with performing a fourth operation within the third time period when the second information is not received within the second time period, where the fourth operation includes sending the fifth information and does not include switching from the second mode to the first mode.

1009: When the terminal device receives no signal for cell access and receives the fifth information within the third time period, the terminal device determines a fifth time period based on a time at which the fifth information is received.

The fifth time period is a time period during which the terminal device sends information used to request the network device to switch from the second mode to the first mode. In a possible implementation, there is an offset of f2 time units between a start time of the fifth time period and the time at which the terminal device receives the fifth information, and f2 is an integer greater than 0. For example, the time at which the terminal device receives the fifth information may be a time at which the broadcast message including the fifth information is received.

1010: When the terminal device receives no signal for cell access and receives the fifth information within the third time period, the terminal device determines a sixth time period during which the network device is in the first mode.

A sequence of step 1009 and step 1010 is not limited. Step 1009 and step 1010 may be combined into one step. That is, when the terminal device receives no signal for cell access and receives the fifth information within the third time period, the terminal device determines the fifth time period based on the time at which the fifth information is received, and determines, based on the fifth information, the sixth time period during which the network device is in the first mode. An implementation in which the terminal device determines, based on the fifth information, the sixth time period during which the network device is in the first mode is similar to the implementation in which the terminal device determines, based on the first information, the third time period during which the network device is in the first mode.

1011: The terminal device sends the second information within the fifth time period.

1012: When the network device receives the second information within the fifth time period, the network device switches from the second mode to the first mode when a start time of the sixth time period arrives.

The fifth time period is a time period during which the network device receives an uplink signal from the terminal device. In a possible implementation, the network device determines the start time of the fifth time period based on a time at which the fifth information is sent. For example, there is an offset of f3 time units between a start time or an end time at which the network device sends the fifth information and the start time of the fifth time period, and f3 is an integer greater than 0. f2 and f3 may be set based on an actual requirement, so that the start time of the fifth time period determined by the network device is the same as that determined by the terminal device. In a possible implementation, the network device preconfigures a fifth time period used to receive an uplink signal, and the terminal device determines the fifth time period based on the time at which the fifth information is received.

1013: The terminal device performs cell access within the sixth time period.

In this embodiment of this application, when the network device receives no second information within the second time period, the network device stays in the second mode and sends the fifth information within the third time period, so that power consumption can be reduced. When the network device receives the second information within the fifth time period, the network device switches from the second mode to the first mode when the start time of the sixth time period arrives, so that the terminal device can access, in time, a cell managed by the network device.

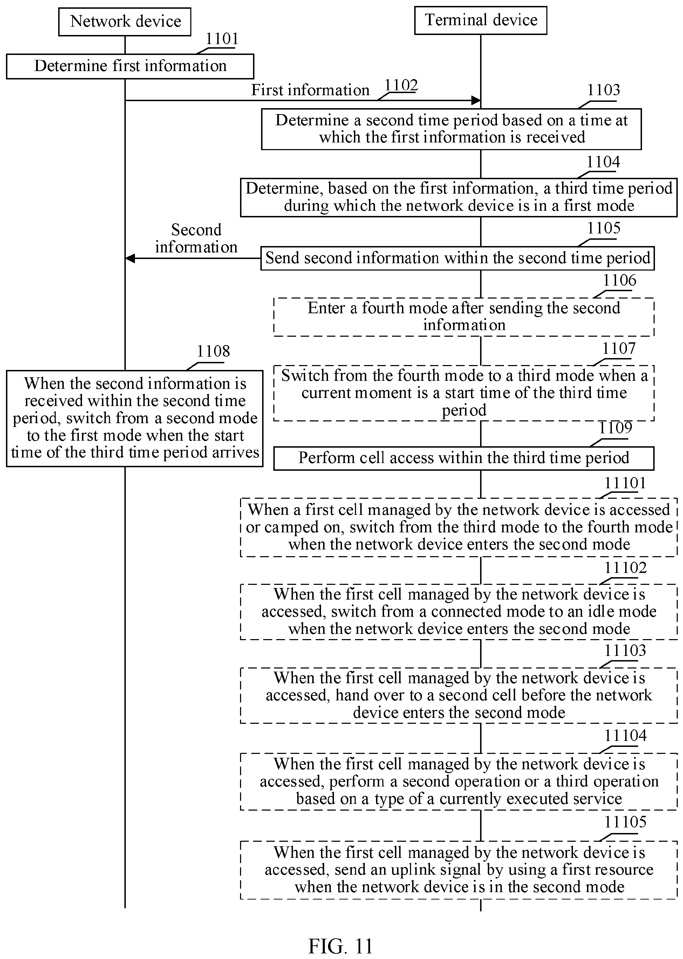

FIG. 11 is a flowchart of another communication method according to an embodiment of this application. The method procedure in FIG. 11 is a possible implementation of the method described in FIG. 9 or FIG. 10. As shown in FIG. 11, the method includes the following steps.

1101: A network device determines first information.

1102: The network device sends the first information.

1103: A terminal device determines a second time period based on a time at which the first information is received.

1104: The terminal device determines, based on the first information, a third time period during which the network device is in a first mode.

1105: The terminal device sends second information within the second time period.

1106: The terminal device enters a fourth mode after sending the second information.

1107: The terminal device switches from the fourth mode to a third mode when a current moment is a start time of the third time period.

1108: When the network device receives the second information within the second time period, the network device switches from a second mode to the first mode when the start time of the third time period arrives.

1109: The terminal device performs cell access within the third time period.

For step 1101 to step 1109, refer to step 901 to step 909 in FIG. 9. Step 1101 to step 1109 may be replaced with step 1001 to step 1013 in FIG. 10.

11101: When the terminal device accesses or camps on a first cell managed by the network device, the terminal device switches from the third mode to the fourth mode when the network device enters the second mode.

11102: When the terminal device accesses the first cell managed by the network device, the terminal device switches from a connected mode to an idle mode when the network device enters the second mode.

When the network device enters the second mode, the terminal device switches from the connected mode to the idle mode, so that power consumption can be reduced.

11103: When the network device accesses the first cell managed by the network device, the terminal device hands over to a second cell before the network device enters the second mode.

11104: When the terminal device accesses the first cell managed by the network device, the terminal device performs a second operation or a third operation based on a type of a currently executed service.

11105: When the terminal device accesses the first cell managed by the network device, the terminal device sends an uplink signal by using a first resource when the network device is in the second mode.

For step 11101 to step 11105, refer to step 7061 to step 7065 in FIG. 7. Details are not described herein again. Step 11101 to step 11105 are five parallel solutions. In other words, the five steps are parallel. The method procedure in FIG. 11 includes any one of step 11101 to step 11105.

This embodiment of this application describes operations that may be performed by the terminal device after or before the network device enters the second mode when the terminal device accesses or camps on the first cell managed by the network device, and these operations can reduce power consumption or meet a service requirement of the terminal device. The network device switches between the first mode and the second mode, and after the network device switches from the second mode to the first mode, the terminal device may perform cell access to access a cell managed by the network device. In this way, the terminal device can access the cell managed by the network device, and power consumption can be reduced.

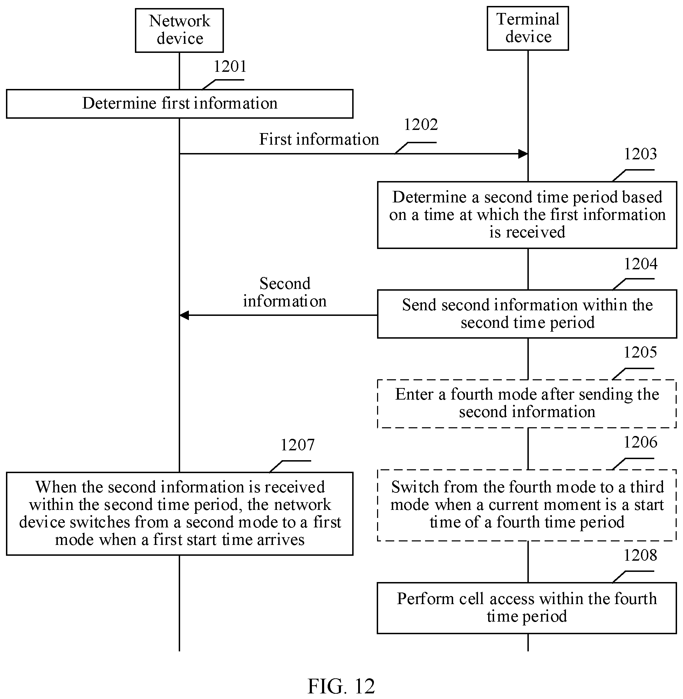

FIG. 12 is a flowchart of another communication method according to an embodiment of this application. The method procedure in FIG. 12 is a possible implementation of the method described in FIG. 8. As shown in FIG. 12, the method includes the following steps.

1201: A network device determines first information.

In a possible implementation, the method procedure in FIG. 12 may further include step 601 and step 602 in FIG. 6. For example, both step 601 and step 602 are performed before step 1201.

1202: The network device sends the first information.

1203: A terminal device determines a second time period based on a time at which the first information is received.

1204: The terminal device sends second information within the second time period.

The second information is used to request the network device to switch from a second mode to a first mode.

For step 1201 to step 1204, refer to step 801 to step 804 in FIG. 8.

1205: The terminal device enters a fourth mode after sending the second information.

For step 1205, refer to step 906 in FIG. 9.

1206: The terminal device switches from the fourth mode to a third mode when a current moment is a start time of a fourth time period.

The start time of the fourth time period is related to a start time or an end time at which the terminal device sends the second information. The fourth time period is a time period during which the network device is in the first mode. Step 1205 and step 1206 are optional.

In a possible implementation, after sending the second information, the terminal device may determine the fourth time period based on the start time or the end time at which the second information is sent. A duration of the fourth time period may be predefined. In this implementation, the fourth time period can be quickly and accurately determined based on the start time or the end time at which the second information is sent. In a possible implementation, there is an offset of y1 time units between the start time of the fourth time period and the start time or the end time at which the second information is sent, and y1 is an integer greater than 0. y1 may be set based on an actual requirement, and is not limited herein.

1207: When the second information is received within the second time period, the network device switches from the second mode to the first mode when a first start time arrives.

The first start time is related to a start time or an end time at which the network device receives the second information. The network device may determine the first start time based on the start time or the end time at which the second information is received. In a possible implementation, there is an offset of y1 time units between the first start time and the start time or the end time at which the network device receives the second information, and y1 is an integer greater than 0. In this implementation, with the offset of y1 time units between the first start time and the start time or the end time at which the second information is received, the first start time can be accurately determined.

1208: The terminal device performs cell access within the fourth time period.

For example, the start time of the fourth time period is the same as the first start time.

In a possible implementation, the terminal device starts a timer at the start time or the end time at which the second information is sent, and a timing duration of the timer is equal to the y1 time units; and that the terminal device performs cell access within the fourth time period may be performing cell access after the timer expires. Optionally, the terminal device switches from the third mode to the fourth mode after starting the timer, and switches from the fourth mode to the third mode after the timer expires. In this implementation, after the timer expires, cell access is performed to access, in time, a cell managed by the network device.

In this embodiment of this application, when the second information is received within the second time period, the network device switches from the second mode to the first mode when the first start time arrives, so that the terminal device can access, in time, a cell managed by the network device.

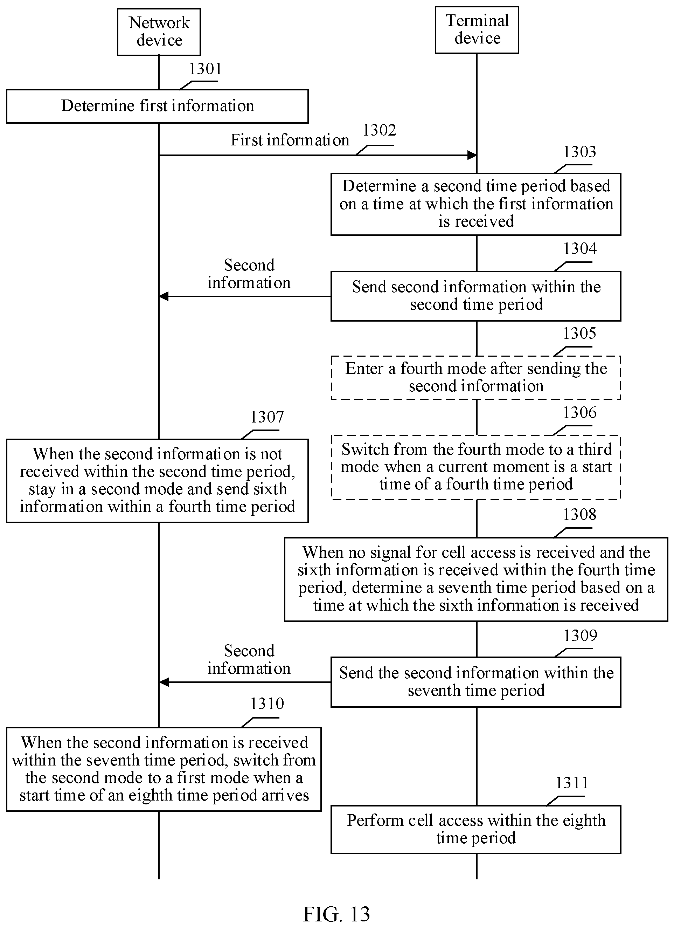

FIG. 13 is a flowchart of another communication method according to an embodiment of this application. The method procedure in FIG. 13 is a possible implementation of the method described in FIG. 8. As shown in FIG. 13, the method includes the following steps.

1301: A network device determines first information.

1302: The network device sends the first information.

1303: A terminal device determines a second time period based on a time at which the first information is received.

1304: The terminal device sends second information within the second time period.

1305: The terminal device enters a fourth mode after sending the second information.

1306: The terminal device switches from the fourth mode to a third mode when a current moment is a start time of a fourth time period.

For step 1301 to step 1306, refer to step 1201 to step 1206 in FIG. 12.

1307: When the network device receives no second information within the second time period, the network device stays in a second mode and sends sixth information within the fourth time period.

The sixth information is similar to the first information. In a possible implementation, the sixth information is included in a broadcast message. The sixth information is used by the terminal device to determine a time period for sending, to the network device, information (for example, the second information) used to request the network device to switch from the second mode to a first mode. Step 1307 may be replaced with performing a fourth operation within the fourth time period when the second information is not received within the second time period, where the fourth operation includes sending the sixth information and does not include switching from the second mode to the first mode.

1308: When the terminal device receives no signal for cell access and receives the sixth information within the fourth time period, the terminal device determines a seventh time period based on a time at which the sixth information is received.

The seventh time period is a time period during which the terminal device sends information used to request the network device to switch from the second mode to the first mode. In other words, the seventh time period may be a time period during which the network device receives an uplink signal when the network device is in the second mode. For example, when the network device is in the second mode, the network device receives an uplink signal only within the seventh time period. A duration of the seventh time period may be predefined.

In a possible implementation, there is an offset of f2 time units between a start time of the seventh time period and the time at which the terminal device receives the sixth information, and f2 is an integer greater than 0. For example, the time at which the terminal device receives the sixth information may be a time at which the broadcast message including the sixth information is received. In a possible implementation, the network device determines the start time of the seventh time period based on a time at which the sixth information is sent. For example, there is an offset of f3 time units between a start time or an end time at which the network device sends the sixth information and the start time of the seventh time period, and f3 is an integer greater than 0. f2 and f3 may be set based on an actual requirement, so that the start time of the seventh time period determined by the network device is the same as that determined by the terminal device. In a possible implementation, the network device preconfigures a seventh time period used to receive an uplink signal, and the terminal device determines the seventh time period based on the time at which the sixth information is received.

1309: The terminal device sends the second information within the seventh time period.

1310: When the network device receives the second information within the seventh time period, the network device switches from the second mode to the first mode when a start time of an eighth time period arrives.

The start time of the eighth time period is related to a start time or an end time at which the terminal device sends the second information within the seventh time period. The eighth time period is a time period during which the network device is in the first mode. A duration of the eighth time period may be predefined. The network device may determine the start time of the eighth time period based on a start time or an end time at which the second information sent by the terminal device within the seventh time period is received. The terminal device may determine the start time of the eighth time period based on the start time or the end time at which the second information is sent within the seventh time period. It should be noted that the eighth time period determined by the terminal device is the same as that determined by the network device.

1311: The terminal device performs cell access within the eighth time period.

In this embodiment of this application, when the network device receives no second information within the second time period, the network device stays in the second mode and sends the sixth information within the fourth time period, so that power consumption can be reduced. When the network device receives the second information within the seventh time period, the network device switches from the second mode to the first mode when the start time of the eighth time period arrives, so that the terminal device can access, in time, a cell managed by the network device.

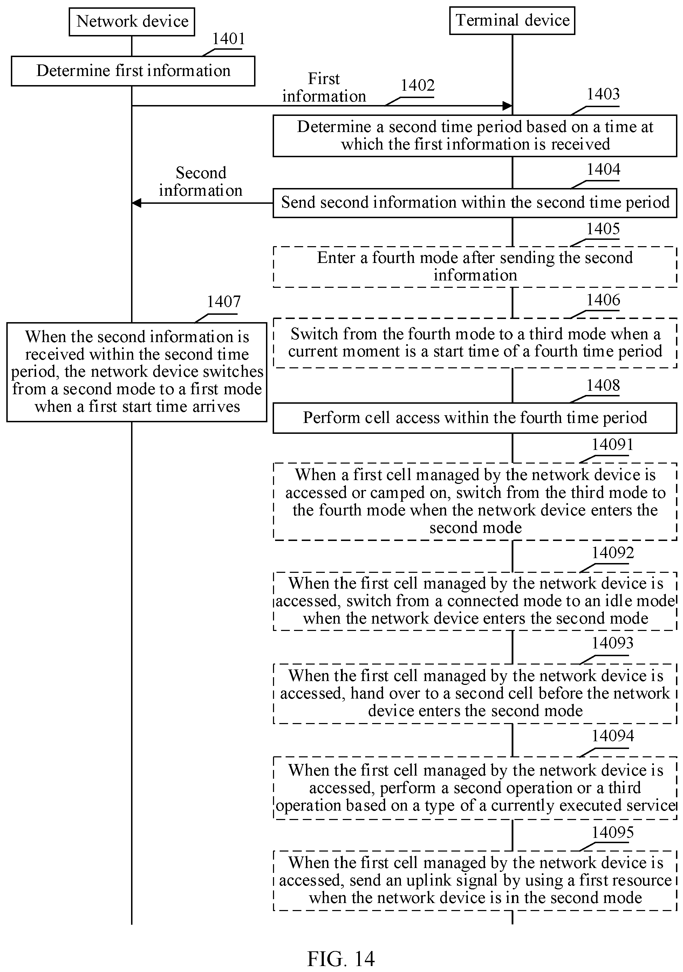

FIG. 14 is a flowchart of another communication method according to an embodiment of this application. The method procedure in FIG. 14 is a possible implementation of the method described in FIG. 12 or FIG. 13. As shown in FIG. 14, the method includes the following steps.

1401: A network device determines first information.

1402: The network device sends the first information.

1403: A terminal device determines a second time period based on a time at which the first information is received.

1404: The terminal device sends second information within the second time period.

1405: The terminal device enters a fourth mode after sending the second information.

1406: The terminal device switches from the fourth mode to a third mode when a current moment is a start time of a fourth time period.

1407: When the second information is received within the second time period, the network device switches from a second mode to a first mode when a first start time arrives.

1408: The terminal device performs cell access within the fourth time period.

For step 1401 to step 1408, refer to step 1201 to step 1208 in FIG. 12. Step 1401 to step 1408 may be replaced with step 1301 to step 1311 in FIG. 13.

14091: When the terminal device accesses or camps on a first cell managed by the network device, the terminal device switches from the third mode to the fourth mode when the network device enters the second mode.

14092: When the terminal device accesses the first cell managed by the network device, the terminal device switches from a connected mode to an idle mode when the network device enters the second mode.

When the network device enters the second mode, the terminal device switches from the connected mode to the idle mode, so that power consumption can be reduced.

14093: When the network device accesses the first cell managed by the network device, the terminal device hands over to a second cell before the network device enters the second mode.

14094: When the terminal device accesses the first cell managed by the network device, the terminal device performs a second operation or a third operation based on a type of a currently executed service.

14095: When the terminal device accesses the first cell managed by the network device, the terminal device sends an uplink signal by using a first resource when the network device is in the second mode.

For step 14091 to step 14095, refer to step 7061 to step 7065 in FIG. 7. Details are not described herein again. Step 14091 to step 14095 are five parallel solutions. In other words, the five steps are parallel. The method procedure in FIG. 14 includes any one of step 14091 to step 14095.

This embodiment of this application describes operations that may be performed by the terminal device after or before the network device enters the second mode when the terminal device accesses or camps on the first cell managed by the network device, and these operations can reduce power consumption or meet a service requirement of the terminal device. The network device switches between the first mode and the second mode, and after the network device switches from the second mode to the first mode, the terminal device may perform cell access to access a cell managed by the network device. In this way, the terminal device can access the cell managed by the network device, and power consumption can be reduced.

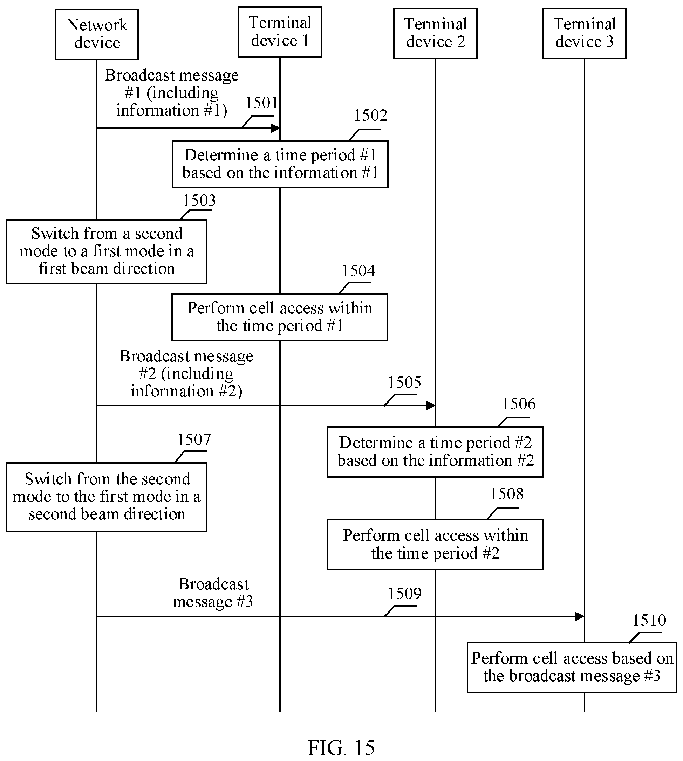

In the foregoing embodiments, one terminal device is used as an example to describe the technical solutions provided in this application. The following uses a terminal device 1 in a first beam direction, a terminal device 2 in a second beam direction, and a terminal device 3 in a third beam direction as examples to describe the technical solutions provided in this application. FIG. 15 is a flowchart of another communication method according to an embodiment of this application. As shown in FIG. 15, the method includes the following steps.

1501: When a network device is in a second mode, the network device sends, in a first beam direction, a broadcast message #1 including information #1.

Correspondingly, one or more terminal devices receive the broadcast message #1 including the information #1. In this embodiment of this application, an example in which a terminal device 1 receives the broadcast message #1 including the information #1 is used for description. The terminal device 1 is located in a terrestrial area corresponding to the first beam direction. The terrestrial area corresponding to the first beam direction is a terrestrial area with low access demand. The network device switches between a first mode and the second mode in the first beam direction. The second mode is a power saving mode. In step 1501, that the network device is in the second mode means that the network device is in the second mode in the first beam direction.

1502: The terminal device 1 determines a time period #1 based on the information #1.

The information #1 is an example of the first information. For example, the information #1 indicates a periodicity, a remaining duration, and a duration of the network device in the second mode in the first beam direction. For example, the information #1 indicates the remaining duration of the network device in the second mode in the first beam direction, a duration of the network device in the first mode in the first beam direction, and a periodicity of the network device in the first mode in the first beam direction. The time period #1 is a time period during which the network device is in the first mode.

1503: The network device switches from the second mode to the first mode in the first beam direction.

In a possible implementation, the network device switches from the second mode to the first mode in the first beam direction at a start moment of the time period #1.

1504: The terminal device 1 performs cell access within the time period #1.

1505: When the network device is in the second mode, the network device sends, in a second beam direction, a broadcast message #2 including information #2.

Correspondingly, one or more terminal devices receive the broadcast message #2 including the information #2. In this embodiment of this application, an example in which a terminal device 2 receives the broadcast message #2 including the information #2 is used for description. The terminal device 2 is located in a terrestrial area corresponding to the second beam direction. The terrestrial area corresponding to the second beam direction is a terrestrial area with low access demand. The network device switches between the first mode and the second mode in the second beam direction. In step 1505, that the network device is in the second mode means that the network device is in the second mode in the second beam direction.

1506: The terminal device 2 determines a time period #2 based on the information #2.

The information #2 is an example of the first information. For example, the information #2 indicates a periodicity, a remaining duration, and a duration of the network device in the second mode in the second beam direction. For example, the information #2 indicates the remaining duration of the network device in the second mode in the second beam direction, a duration of the network device in the first mode in the second beam direction, and a periodicity of the network device in the first mode in the second beam direction. The time period #1 is a time period during which the network device is in the first mode.

1507: The network device switches from the second mode to the first mode in the second beam direction.

In a possible implementation, the network device switches from the second mode to the first mode in the second beam direction at a start moment of the time period #2.

1508: The terminal device 2 performs cell access within the time period #2.

In a possible implementation, the information #1 and the information #2 are different, and/or the time period #1 and the time period #2 are different. In this implementation, the network device switches between the first mode and the second mode in a plurality of beam directions corresponding to terrestrial areas with low access demand, and a switching time point and/or duration ratio between the two modes vary in different beam directions. For example, a ratio of a duration of the network device in the first mode to a duration of the network device in the second mode in the first beam direction is less than a ratio of a duration of the network device in the first mode to a duration of the network device in the second mode in a second beam direction, and access demand in a terrestrial area corresponding to the first beam direction is greater than access demand in a terrestrial area corresponding to the second beam direction.

In a possible implementation, the information #1 is the same as the information #2, and the time period #1 is the same as the time period #2. In this implementation, the network device switches between the first mode and the second mode in a plurality of beam directions corresponding to terrestrial areas with low access demand, and a switching time point and duration ratio between the two modes both remain the same in different beam directions. In other words, the network device sends same information and synchronously switches between the first mode and the second mode in a plurality of beam directions corresponding to terrestrial areas with low access demand.

1509: The network device sends a broadcast message #3 in a third beam direction.

Correspondingly, one or more terminal devices receive the broadcast message #3. In this embodiment of this application, an example in which a terminal device 3 receives the broadcast message #3 is used for description. The broadcast message #3 may include all system messages used by the terminal device to perform cell access. The network device stays in the first mode in the third beam direction. In other words, the network device periodically sends, in the third beam direction, all the system messages used by the terminal device to perform cell access. A terrestrial area corresponding to the third beam direction is a terrestrial area with high access demand.

1510: The terminal device 3 performs cell access based on the broadcast message #3.

Step 1501 to step 1504, step 1505 to step 1508, and step 1501 to step 1510 may be independent of each other. A sequence of step 1501 to step 1504, step 1505 to step 1508, and step 1501 to step 1510 is not limited.

In this embodiment of this application, the network device switches between the first mode and the second mode in the first beam direction, and switches between the first mode and the second mode in the second beam direction, so that access demands of terminal devices in terrestrial areas with low access demand can be met, and power consumption can be reduced. The broadcast message #3 is sent in the third beam direction, so that access demands of terminal devices in a terrestrial area with high demand can be met.

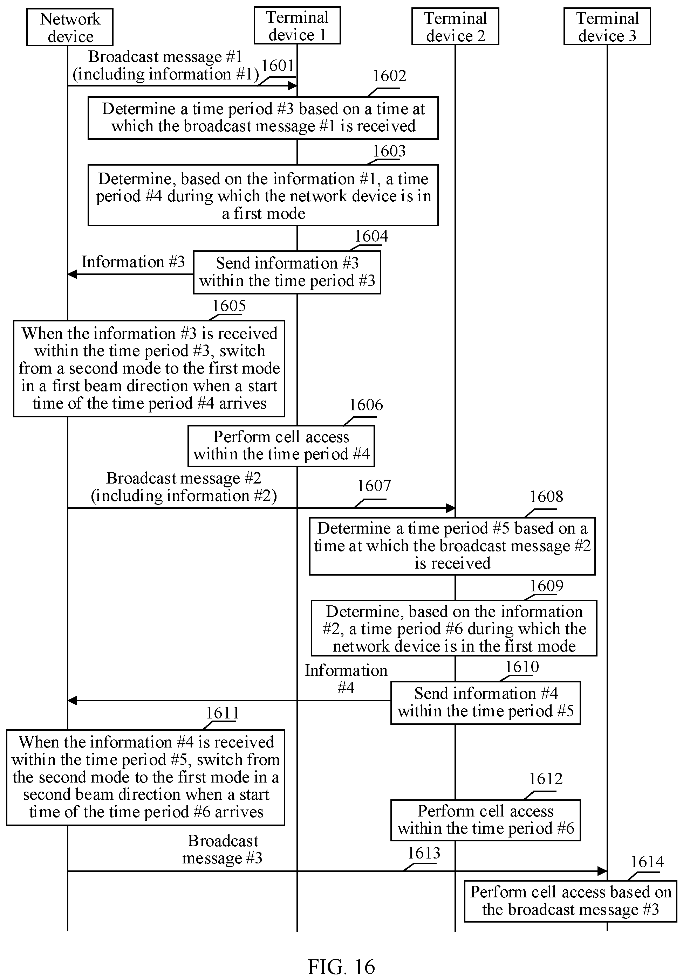

FIG. 16 is a flowchart of another communication method according to an embodiment of this application. As shown in FIG. 16, the method includes the following steps.

1601: When a network device is in a second mode, the network device sends, in a first beam direction, a broadcast message #1 including information #1.

Correspondingly, one or more terminal devices receive the broadcast message #1 including the information #1. In this embodiment of this application, an example in which a terminal device 1 receives the broadcast message #1 including the information #1 is used for description. For step 1601, refer to step 1501 in FIG. 15.

1602: The terminal device 1 determines a time period #3 based on a time at which the broadcast message #1 is received.

The time period #3 is an example of the second time period. For step 1602, refer to step 803 in FIG. 8. Details are not described herein again.

1603: The terminal device 1 determines, based on the information #1, a time period #4 during which the network device is in a first mode.

The information #1 is an example of the first information, and the time period #4 is an example of the third time period or the first time period. For step 1603, refer to step 904 in FIG. 9. The time period #4 may be a time period during which the network device is in the first mode in the first beam direction.

1604: The terminal device 1 sends information #3 within the time period #3.

The information #3 is an example of the second information. The information #3 is used to request the network device to switch from the second mode to the first mode in the first beam direction.

1605: When the network device receives the information #3 within the time period #3, the network device switches from the second mode to the first mode in the first beam direction when a start time of the time period #4 arrives.

For step 1605, refer to step 908 in FIG. 9. If the network device receives no information #3 within the time period #3, the network device stays in the second mode within the time period #4.

1606: The terminal device 1 performs cell access within the time period #4.

1607: When the network device is in the second mode, the network device sends, in a second beam direction, a broadcast message #2 including information #2.

Correspondingly, one or more terminal devices receive the broadcast message #2 including the information #12. In this embodiment of this application, an example in which a terminal device 2 receives the broadcast message #2 including the information #2 is used for description. For step 1607, refer to step 1505 in FIG. 15.

1608: The terminal device 2 determines a time period #5 based on a time at which the broadcast message #2 is received.

The time period #5 is an example of the second time period. For step 1608, refer to step 803 in FIG. 8. Details are not described herein again.

1609: The terminal device 2 determines, based on the information #2, a time period #6 during which the network device is in the first mode.

The information #2 is an example of the first information, and the time period #6 is an example of the third time period. For step 1609, refer to step 904 in FIG. 9. The time period #6 may be a time period during which the network device is in the first mode in the second beam direction.

1610: The terminal device 2 sends information #4 within the time period #5.

The information #4 is an example of the second information. The information #4 is used to request the network device to switch from the second mode to the first mode in the second beam direction.

1611: When the network device receives the information #4 within the time period #5, the network device switches from the second mode to the first mode in the second beam direction when a start time of the time period #6 arrives.

For step 1611, refer to step 908 in FIG. 9. If the network device receives no information #4 within the time period #5, the network device stays in the second mode within the time period #6.

1612: The terminal device 2 performs cell access within the time period #6.

In a possible implementation, the information #3 and the information #4 are different, and/or the time period #4 and the time period #6 are different. In this implementation, the network device switches between the first mode and the second mode in a plurality of beam directions corresponding to terrestrial areas with low access demand, and a switching time point and/or duration ratio between the two modes vary in different beam directions. For example, a ratio of a duration of the network device in the first mode to a duration of the network device in the second mode in the first beam direction is less than a ratio of a duration of the network device in the first mode to a duration of the network device in the second mode in a second beam direction, and access demand in a terrestrial area corresponding to the first beam direction is greater than access demand in a terrestrial area corresponding to the second beam direction.

1613: The network device sends a broadcast message #3 in a third beam direction.

Correspondingly, one or more terminal devices receive the broadcast message #3. In this embodiment of this application, an example in which a terminal device 3 receives the broadcast message #3 is used for description.

1614: The terminal device performs cell access based on the broadcast message #3.

For step 1613 to step 1614, refer to step 1509 to step 1510 in FIG. 15.

Step 1601 to step 1606, step 1607 to step 1612, and step 1613 to step 1614 may be independent of each other. A sequence of step 1601 to step 1606, step 1607 to step 1612, and step 1613 to step 1614 is not limited.

In this embodiment of this application, the network device switches between the first mode and the second mode in the first beam direction, and switches between the first mode and the second mode in the second beam direction, so that access demands of terminal devices in terrestrial areas with low access demand can be met, and power consumption can be reduced. The broadcast message #3 is sent in the third beam direction, so that access demands of terminal devices in a terrestrial area with high demand can be met.

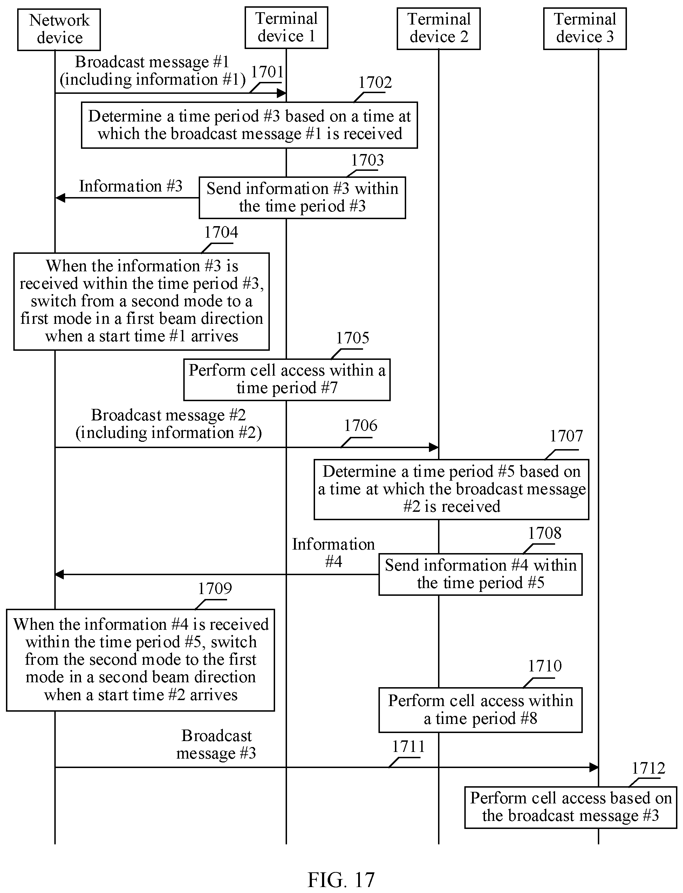

FIG. 17 is a flowchart of another communication method according to an embodiment of this application. As shown in FIG. 17, the method includes the following steps.

1701: When a network device is in a second mode, the network device sends, in a first beam direction, a broadcast message #1 including information #1.

Correspondingly, one or more terminal devices receive the broadcast message #1 including the information #1. In this embodiment of this application, an example in which a terminal device 1 receives the broadcast message #1 including the information #1 is used for description. For step 1701, refer to step 1501 in FIG. 15.

1702: The terminal device 1 determines a time period #3 based on a time at which the broadcast message #1 is received.

The time period #3 is an example of the second time period. For step 1702, refer to step 803 in FIG. 8. Details are not described herein again.

1703: The terminal device 1 sends information #3 within the time period #3.

The information #3 is an example of the second information. The information #3 is used to request the network device to switch from the second mode to a first mode in the first beam direction.

1704: When the network device receives the information #3 within the time period #3, the network device switches from the second mode to the first mode in the first beam direction when a start time #1 arrives.

The information #3 is an example of the second information, and the start time #1 is an example of the first start time. For step 1704, refer to step 1207 in FIG. 12. For example, the start time #1 is related to a start time or an end time at which the network device receives the information #3. The network device may determine the start time #1 based on the start time or the end time at which the information #3 is received.

In a possible implementation, there is an offset of y1 time units between the start time #1 and the start time or the end time at which the network device receives the information #3, and y1 is an integer greater than 0. In this implementation, with the offset of y1 time units between the first start time and the start time or the end time at which the second information is received, so that the first start time can be accurately determined.

1705: The terminal device 1 performs cell access within a time period #7.

The time period #7 is an example of the fourth time period in the embodiment shown in FIG. 12. In a possible implementation, after sending the information #3, the terminal device 1 may determine the time period #7 based on a start time or an end time at which the information #3 is sent. A duration of the time period #7 may be predefined. In a possible implementation, there is an offset of y1 time units between a start time of the time period #7 and the start time or the end time at which the information #3 is sent, and y1 is an integer greater than 0. y1 may be set based on an actual requirement, and is not limited herein.

1706: When the network device is in the second mode, the network device sends, in a second beam direction, a broadcast message #2 including information #2.

Correspondingly, one or more terminal devices receive the broadcast message #2 including the information #12. In this embodiment of this application, an example in which a terminal device 2 receives the broadcast message #2 including the information #2 is used for description. For step 1706, refer to step 1505 in FIG. 15.

1707: The terminal device 2 determines a time period #5 based on a time at which the broadcast message #2 is received.

The time period #5 is an example of the second time period. For step 1707, refer to step 803 in FIG. 8. Details are not described herein again.

1708: The terminal device 2 sends information #4 within the time period #5.

The information #4 is an example of the second information. The information #4 is used to request the network device to switch from the second mode to the first mode in the second beam direction.

1709: When the network device receives the information #4 within the time period #5, the network device switches from the second mode to the first mode in the second beam direction when a start time #2 arrives.

The information #4 is an example of the second information, and the start time #2 is an example of the first start time. For step 1709, refer to step 1207 in FIG. 12. For example, the start time #2 is related to a start time or an end time at which the network device receives the information #4. The network device may determine the start time #2 based on the start time or the end time at which the information #4 is received.

1710: The terminal device 2 performs cell access within a time period #8.

The time period #8 is an example of the fourth time period in the embodiment shown in FIG. 12. In a possible implementation, after sending the information #4, the terminal device 2 may determine the time period #8 based on a start time or an end time at which the information #4 is sent. A duration of the time period #8 may be predefined. In a possible implementation, there is an offset of y1 time units between a start time of the time period #8 and the start time or the end time at which the information #4 is sent, and y1 is an integer greater than 0. y1 may be set based on an actual requirement, and is not limited herein.

In a possible implementation, the information #3 and the information #4 are different, and/or the time period #7 and the time period #9 are different. In this implementation, the network device switches between the first mode and the second mode in a plurality of beam directions corresponding to terrestrial areas with low access demand, and a switching time point and/or duration ratio between the two modes vary in different beam directions.

1711: The network device sends a broadcast message #3 in a third beam direction.

Correspondingly, one or more terminal devices receive the broadcast message #3. In this embodiment of this application, an example in which a terminal device 3 receives the broadcast message #3 is used for description.

1712: The terminal device 3 performs cell access based on the broadcast message #3.

For step 1711 to step 1712, refer to step 1509 to step 1510 in FIG. 15.

Step 1701 to step 1705, step 1706 to step 1710, and step 1711 to step 1712 may be independent of each other. A sequence of step 1701 to step 1705, step 1706 to step 1710, and step 1711 to step 1712 is not limited.

In this embodiment of this application, the network device switches between the first mode and the second mode in the first beam direction, and switches between the first mode and the second mode in the second beam direction, so that access demands of terminal devices in terrestrial areas with low access demand can be met, and power consumption can be reduced. The broadcast message #3 is sent in the third beam direction, so that access demands of terminal devices in a terrestrial area with high demand can be met.

The following describes, with reference to accompanying drawings, structures of communication apparatuses that can implement the communication methods provided in embodiments of this application. The following merely briefly describes the communication apparatuses. For details about solution implementation, refer to descriptions of the foregoing method embodiments. Details are not described below again.

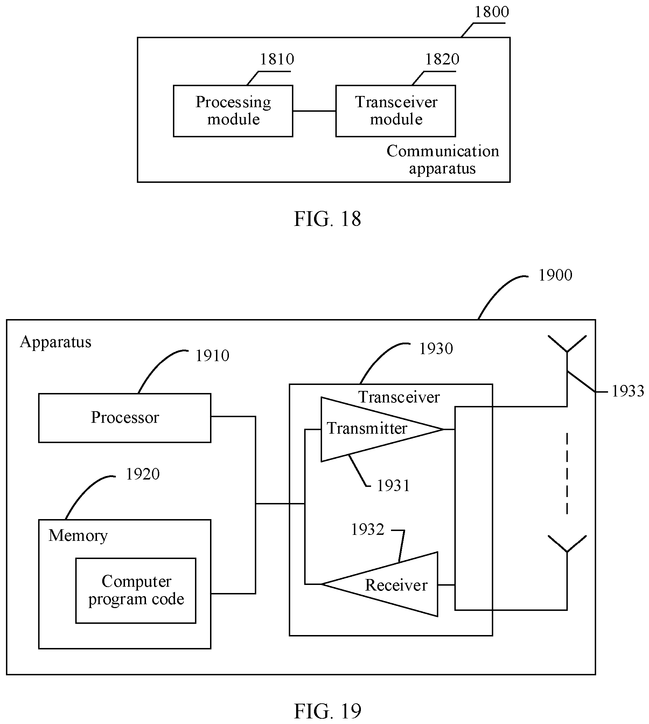

FIG. 18 is a diagram of a structure of a communication apparatus 1800 according to an embodiment of this application. The communication apparatus 1800 may correspondingly implement functions or steps implemented by the network device in the foregoing method embodiments, or may correspondingly implement functions or steps implemented by the terminal device in the foregoing method embodiments. The communication apparatus may include a processing module 1810 and a transceiver module 1820. In a possible implementation, the communication apparatus may further include a storage unit. The storage unit may be configured to store instructions (code or programs) and/or data. The processing module 1810 and the transceiver module 1820 may be coupled to the storage unit. For example, the processing module 1810 may read instructions (code or programs) and/or data in the storage unit, to implement a corresponding method. The foregoing units may be independently disposed, or may be partly or all integrated. For example, the transceiver module 1820 may include a sending module and a receiving module. The sending module may be a transmitter. The receiving module may be a receiver. An entity corresponding to the transceiver module 1820 may be a transceiver circuit, for example, a transceiver or a communication interface.

In some possible implementations, the communication apparatus 1800 can correspondingly implement behavior and functions of the network device in the foregoing method embodiments. For example, the communication apparatus 1800 may be the network device, or may be a component (for example, a chip or a circuit) used in the network device. For example, the transceiver module 1820 may be configured to perform all receiving and sending operations performed by the network device in the embodiments of FIG. 3 and FIG. 5 to FIG. 17. For example, the processing module 1810 may be configured to perform all operations performed by the network device in the embodiments of FIG. 3 and FIG. 5 to FIG. 17 except the receiving and sending operations.

In some possible implementations, the communication apparatus 1800 can correspondingly implement behavior and functions of the terminal device in the foregoing method embodiments. For example, the communication apparatus 1800 may be the terminal device, or may be a component (for example, a chip or a circuit) used in the terminal device. For example, the transceiver module 1820 may be configured to perform all receiving and sending operations performed by the terminal device in the embodiments of FIG. 3 and FIG. 5 to FIG. 17. For example, the processing module 1810 may be configured to perform all operations performed by the terminal device in the embodiments of FIG. 3 and FIG. 5 to FIG. 17 except the receiving and sending operations.

This application further provides an apparatus 1900. The apparatus 1900 may be a terminal device, or a processor or a chip in a terminal device. The apparatus 1900 may be configured to perform operations performed by the terminal device in the foregoing method embodiments.

When the apparatus 1900 is a terminal device, FIG. 19 is a simplified diagram of a structure of the terminal device. As shown in FIG. 19, the terminal device includes a processor, a memory, and a transceiver. The memory may store computer program code. The transceiver includes a transmitter 1931, a receiver 1932, a radio frequency circuit (not shown in the figure), an antenna 1933, and an input/output apparatus (not shown in the figure).

The processor is mainly configured to: process a communication protocol and communication data, control the terminal device, execute a software program, process data of the software program, and the like.

The memory is mainly configured to store the software program and the data.

The radio frequency circuit is mainly configured to: perform conversion between a baseband signal and a radio frequency signal, and process the radio frequency signal.

The antenna is mainly configured to receive and send radio frequency signals in an electromagnetic wave form.

The input/output apparatus may include a touchscreen, a display, a keyboard, or the like. The input/output apparatus is mainly configured to receive data input by a user and output data to the user. It should be noted that some types of terminal devices may have no input/output apparatus.

When data needs to be sent, the processor performs baseband processing on the to-be-sent data, and then outputs a baseband signal to the radio frequency circuit. Then, the radio frequency circuit performs radio frequency processing on the baseband signal, and then sends a radio frequency signal in the electromagnetic wave form to the outside via the antenna. When data is sent to the terminal device, the radio frequency circuit receives a radio frequency signal via the antenna. The radio frequency circuit converts the radio frequency signal into a baseband signal, and outputs the baseband signal to the processor. The processor converts the baseband signal into data and processes the data. For ease of description, FIG. 19 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver module of the terminal device, and the processor that has a processing function may be considered as a processing module of the terminal device.

As shown in FIG. 19, the terminal device includes a processor 1910, a memory 1920, and a transceiver 1930. The processor 1910 may also be referred to as a processing unit, a processing board, a processing module, a processing apparatus, or the like. The transceiver 1930 may also be referred to as a transceiver unit, a transceiver machine, a transceiver apparatus, or the like.

Optionally, a component configured to implement a receiving function in the transceiver 1930 is considered as a receiving module, and a component configured to implement a sending function in the transceiver 1930 is considered as a sending module. That is, the transceiver 1930 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitting module, a transmitter circuit, or the like.

In a possible implementation, the processor 1910 is configured to perform processing actions of the terminal device in the embodiments shown in FIG. 3 and FIG. 5 to FIG. 17. The transceiver 1930 is configured to perform receiving and sending actions of the terminal device in the embodiments shown in FIG. 3 and FIG. 5 to FIG. 17.

It should be understood that FIG. 19 is merely an example rather than a limitation. The terminal device including the transceiver module and the processing module may not depend on the structure shown in FIG. 19.

When the apparatus 1900 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as outputting of the chip, and a receiving operation performed by the terminal device in the foregoing method embodiments may be understood as inputting of the chip.

This application further provides an apparatus 2000. The apparatus 2000 may be a network device or a chip. The apparatus 2000 may be configured to perform operations performed by the network device in the embodiments shown in FIG. 3 and FIG. 5 to FIG. 17.

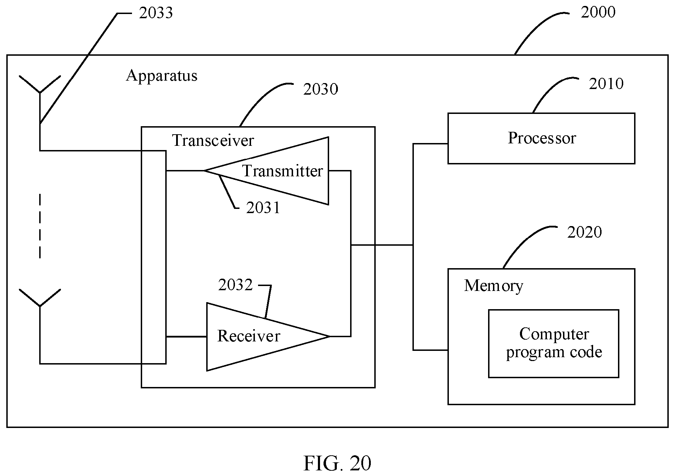

When the apparatus 2000 is a network device, for example, a base station, FIG. 20 is a simplified diagram of a structure of the base station. The base station includes a part 2010, a part 2020, and a part 2030.

The part 2010 is mainly configured to perform baseband processing, control the base station, and the like. The part 2010 is usually a control center of the base station, may be usually referred to as a processor, and is configured to control the base station to perform processing operations of the base station in the foregoing method embodiments.

The part 2020 is mainly configured to store computer program code and data.

The part 2030 is mainly configured to: receive and send radio frequency signals, and perform conversion between the radio frequency signals and baseband signals. The part 2030 may be usually referred to as a transceiver module, a transceiver machine, a transceiver circuit, a transceiver, or the like. The transceiver module of the part 2030 may also be referred to as a transceiver machine, a transceiver, or the like, and includes an antenna 2033 and a radio frequency circuit (not shown in the figure). The radio frequency circuit is mainly configured to perform radio frequency processing. Optionally, in the part 2030, a component configured to implement a receiving function may be considered as a receiver, and a component configured to implement a sending function may be considered as a transmitter. That is, the part 2030 includes a receiver 2032 and a transmitter 2031. The receiver may also be referred to as a receiving module, a receiver machine, a receiver circuit, or the like. The transmitter may also be referred to as a transmitting module, a transmitter machine, a transmitter circuit, or the like.

The part 2010 and the part 2020 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, a plurality of boards may share one or more processors, or a plurality of boards share one or more memories, or a plurality of boards simultaneously use one or more processors.

For example, in an implementation, the transceiver module of the part 2030 is configured to perform receiving/sending-related processes performed by the network device in the embodiments shown in FIG. 3 and FIG. 5 to FIG. 17. The processor of the part 2010 is configured to perform processing-related processes performed by the network device in the embodiments shown in FIG. 3 and FIG. 5 to FIG. 17.

It should be understood that FIG. 20 is merely an example rather than a limitation. The network device including the processor, the memory, and the transceiver may not depend on the structure shown in FIG. 20.

When the apparatus 2000 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as outputting of the chip, and a receiving operation performed by the network device in the foregoing method embodiments may be understood as inputting of the chip.

This application further provides a computer-readable storage medium. The computer-readable storage medium stores a computer program or instructions. When the computer program or the instructions are run on a computer, the computer is enabled to perform the method in the foregoing embodiments. For example, when the computer program is executed by the computer, the computer is enabled to implement the method performed by the network device or the terminal device in the foregoing method embodiments.

An embodiment of this application further provides a computer program product. The computer program product includes a computer program or instructions. When the computer program or the instructions are run on a computer, the method in the foregoing embodiments is performed.

This application further provides a communication system, including the network device and the terminal device.

This application further provides a chip. The chip includes a communication interface and a processor. The communication interface is configured to receive and send signals for the chip. The processor is configured to execute a computer program or instructions, to enable a communication apparatus including the chip to perform the method in the foregoing embodiments.

An embodiment of this application further provides a chip apparatus, including a processor, configured to invoke a computer program or computer instructions stored in a memory, to enable the processor to perform the method in any one of the embodiments shown in FIG. 3 and FIG. 5 to FIG. 17.

In a possible implementation, inputting of the chip apparatus corresponds to a receiving operation in any one of the embodiments shown in FIG. 3 and FIG. 5 to FIG. 17, and outputting of the chip apparatus corresponds to a sending operation in any one of the embodiments shown in FIG. 3 and FIG. 5 to FIG. 17.

Optionally, the processor is coupled to the memory through an interface.

Optionally, the chip apparatus further includes the memory, and the memory stores the computer program or the computer instructions.

Any one of the processors mentioned above may be a general-purpose central processing unit, a microprocessor, an application-specific integrated circuit (application-specific integrated circuit, ASIC), or one or more integrated circuits configured to control program execution of the method provided in any one of the embodiments shown in FIG. 3 and FIG. 5 to FIG. 17. Any one of the memories mentioned above may be a read-only memory (read-only memory, ROM) or another type of static storage device that can store static information and instructions, a random access memory (random access memory, RAM), or the like.

It may be clearly understood by persons skilled in the art that for convenience and brevity of description, for explanation and beneficial effect of related content in any one of the apparatuses provided above, refer to a corresponding method embodiment provided above. Details are not described herein again.

In the several embodiments provided in this application, it should be understood that the disclosed system, apparatus, and method may be implemented in other manners. For example, the described apparatus embodiments are merely examples. For example, the unit division is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate parts may or may not be physically separate, and parts displayed as units may or may not be physical units, may be located in one place, or may be distributed on a plurality of network units. A part of or all the units may be selected based on an actual requirement to achieve objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When implemented in the form of the software functional unit and sold or used as an independent product, the integrated unit may be stored in a computer-readable storage medium. Based on such an understanding, the technical solutions of this application essentially, or a contributing part, or all or a part of the technical solutions may be implemented in a form of a software product. The computer software product is stored in a storage medium, and includes several computer programs or instructions for instructing a computer device (which may be a personal computer, a server, a network device, or the like) to perform all or a part of steps of the methods described in embodiments of this application. The storage medium includes any medium that can store program code, such as a USB flash drive, a removable hard disk drive, a ROM, a RAM, a magnetic disk, or an optical disc.

In conclusion, the foregoing embodiments are merely intended to describe the technical solutions of this application, rather than limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

The foregoing embodiments may be all or partly implemented by using software, hardware, firmware, or any combination thereof. When software is used for implementation, the embodiments may be all or partly implemented in a form of a computer program product. The computer program product includes one or more computer programs or instructions. When the computer programs or instructions are loaded and executed on a computer, the procedures or functions in embodiments of this application are all or partly executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or include both.

In embodiments of this application, unless otherwise specified or a logic conflict occurs, terms and/or descriptions in different embodiments are consistent and may be mutually referenced, and technical features in different embodiments may be combined based on an internal logical relationship thereof, to form a new embodiment.

## Claims

1. A communication method, wherein the method comprises:
receiving first information, wherein the first information is used to determine a first time period, the first time period is a time period during which a network device is in a first mode, and the first mode is a mode in which cell access is supported; and
performing cell access within the first time period.

2. The method according to claim 1, wherein after receiving the first information, the method further comprises:
sending second information within a second time period, wherein the second information is used to request the network device to switch from a second mode to the first mode, the second mode is a mode in which cell access is not supported, and the second time period is determined based on a time at which the first information is received.

3. The method according to claim 2, wherein before sending second information within the second time period, the method further comprises:
determining the second time period based on the time at which the first information is received, wherein the second time period is a time period during which the network device receives an uplink signal.

4. The method according to claim 3, wherein there is an offset of f2 time units between a start time of the second time period and the time at which the first information is received, and f2 is an integer greater than 0.

5. The method according to any one of claims 2 to 4, wherein after sending the second information within the second time period, the method further comprises: entering a fourth mode, wherein the fourth mode is a mode in which no channel is monitored.

6. The method according to any one of claims 1 to 5, wherein before performing cell access within the first time period, the method further comprises:
receiving third information, wherein the third information indicates that the network device accepts the request for switching from the second mode to the first mode; and
the performing cell access within the first time period comprises: performing cell access within the first time period in response to the third information.

7. The method according to any one of claims 1 to 5, wherein the first information indicates at least one of the following: a remaining duration of the network device in the second mode, a duration of the network device in the second mode, a periodicity of the network device in the second mode, a duration of the network device in the first mode, or a periodicity of the network device in the first mode, and the second mode is a mode in which cell access is not supported.

8. The method according to any one of claims 2 to 4, wherein a start time of the first time period is related to a start time or an end time at which the second information is sent.

9. The method according to claim 8, wherein there is an offset of y1 time units between the start time of the first time period and the start time or the end time at which the second information is sent, and y1 is an integer greater than 0.

10. The method according to any one of claims 1 to 9, wherein after receiving the first information, the method further comprises:
entering the fourth mode, wherein the fourth mode is a mode in which no channel is monitored.

11. The method according to any one of claims 1 to 10, wherein performing cell access within the first time period comprises:
receiving, within the first time period, a signal for cell access; and performing cell access when the signal for cell access is received.

12. The method according to any one of claims 1 to 11, wherein before performing cell access within the first time period, the method further comprises:
switching from the fourth mode to a third mode, wherein the fourth mode is a mode in which no channel is monitored, and the third mode is a mode in which a channel is monitored.

13. The method according to any one of claims 1 to 12, wherein the first information indicates the remaining duration of the network device in the second mode; and before performing cell access within the first time period, the method further comprises: starting a timer based on the first information, wherein a timing duration of the timer is greater than or equal to the remaining duration of the second mode that the network device is currently in; and
the performing cell access within the first time period comprises: performing cell access after the timer expires.

14. The method according to claim 13, wherein after starting the timer and before the timer expires, the method further comprises:
entering the fourth mode, wherein the fourth mode is a mode in which no channel is monitored.

15. The method according to claim 14, wherein after starting the timer and before performing cell access, the method further comprises:
switching from the fourth mode to the third mode, wherein the third mode is a mode in which a channel is monitored.

16. The method according to any one of claims 1 to 15, wherein before receiving the first information, the method further comprises:
receiving a first downlink signal; and
determining, based on a time domain position and/or a frequency domain position of the first downlink signal, a time domain position and/or a frequency domain position at which the network device sends the first information, wherein there is an offset of f1 time units between a start time or an end time at which the first downlink signal is received and a start time at which the first information is sent or received, f1 is an integer greater than 0, and the frequency domain position of the first downlink signal is related to the frequency domain position of the first information.

17. The method according to claim 16, wherein the first downlink signal comprises one of a primary synchronization signal PSS and a secondary synchronization signal SSS.

18. The method according to claim 16 or 17, wherein after determining, based on the time domain position and/or the frequency domain position of the first downlink signal, the time domain position and/or the frequency domain position at which the network device sends the first information, and before the time domain position at which the network device sends the first information arrives, the method further comprises:
entering the fourth mode, wherein the fourth mode is a mode in which no channel is monitored.

19. The method according to any one of claims 1 to 18, wherein the method further comprises:
when a first cell managed by the network device is accessed or camped on, switching from the third mode to the fourth mode at a first time determined based on the first information, wherein the second mode is a mode in which cell access is not supported, an operation performed in the third mode comprises a first operation, an operation performed in the fourth mode does not comprise the first operation, and the first operation comprises at least one of the following: monitoring a control channel, receiving a downlink signal, or sending an uplink signal.

20. The method according to any one of claims 1 to 18, wherein the method further comprises:
when a first cell managed by the network device is accessed, switching from a connected mode to an idle mode at a second time determined based on the first information, wherein the second mode is a mode in which cell access is not supported.

21. The method according to any one of claims 1 to 18, wherein the method further comprises:
when a first cell managed by the network device is accessed, handing over to a second cell before the network device enters the second mode, wherein the second cell is associated with a first network device different from the network device, and the second mode is a mode in which cell access is not supported.

22. The method according to any one of claims 1 to 18, wherein the method further comprises:
when a first cell managed by the network device is accessed, performing a second operation or a third operation based on a type of a currently executed service, wherein the second operation comprises performing cell handover before the network device enters the second mode, the third operation comprises camping on the first cell after the network device enters the second mode, and the second mode is a mode in which cell access is not supported.

23. The method according to claim 22, wherein performing the second operation or the third operation based on the type of the currently executed service comprises:
performing the second operation when the currently executed service has a continuity requirement; and/or
performing the third operation when the currently executed service does not have a continuity requirement.

24. The method according to claim 23, wherein the third operation further comprises entering the fourth mode, an operation performed by a communication apparatus in the fourth mode does not comprise a first operation, and the first operation comprises at least one of the following: monitoring a control channel, receiving a downlink signal, or sending an uplink signal.

25. The method according to any one of claims 1 to 24, wherein the method further comprises:
when the first cell managed by the network device is accessed, sending an uplink signal by using a first resource when the network device is in the second mode, wherein the first resource is associated with a downlink synchronization signal, and the second mode is a mode in which cell access is not supported.

26. The method according to claim 25, wherein sending the uplink signal by using the first resource comprises:
sending the uplink signal based on synchronization information by using the first resource, wherein the synchronization information is obtained based on a message sent by the network device in the second mode, or the synchronization information is obtained based on a message sent by the network device in the first mode, and the second mode is a mode in which cell access is not supported.

27. The method according to claim 26, wherein the first information further comprises the synchronization information.

28. The method according to any one of claims 1 to 27, wherein after receiving the first information, the method further comprises: determining the first time period based on the first information.

29. The method according to any one of claims 1 to 28, wherein receiving the first information comprises: when no cell managed by the network device is accessed, receiving a broadcast message comprising the first information.

30. The method according to any one of claims 1 to 29, wherein the first information is sent by the network device in the second mode, and the second mode is a mode in which the network device sends a part of system messages for cell access or a mode in which the network device does not send a system message for cell access.

31. A communication method, wherein the method comprises:
determining first information, wherein the first information is used to determine a first time period, the first time period is a time period during which a network device is in a first mode, and the first mode is a mode in which cell access is supported; and
sending the first information.

32. The method according to claim 31, wherein after sending the first information, the method further comprises:
switching from a second mode to the first mode when a start time of the first time period arrives, wherein the second mode is a mode in which cell access is not supported.

33. The method according to claim 31, wherein after sending the first information, the method comprises:
switching from the second mode to the first mode when second information is received within a second time period, wherein the second information is used to request the network device to switch from the second mode to the first mode, the first mode is a mode in which cell access is supported, the second mode is a mode in which cell access is not supported, and the second time period is determined based on a time at which the first information is sent.

34. The method according to claim 33, wherein there is an offset of f2 time units between a start time of the second time period and the time at which the first information is sent, and f2 is an integer greater than 0.

35. The method according to claim 33 or 34, wherein the switching from the second mode to the first mode comprises:
switching from the second mode to the first mode when a start time of a third time period arrives, wherein the third time period is a time period during which the network device is in the first mode.

36. The method according to claim 35, wherein the method further comprises:
when the second information is not received within the second time period, performing a fourth operation within the third time period, wherein the fourth operation does not comprise switching from the second mode to the first mode.

37. The method according to any one of claims 31 to 36, wherein the first information indicates at least one of the following: a remaining duration of the network device in the second mode, a duration of the network device in the second mode, a periodicity of the network device in the second mode, a duration of the network device in the first mode, or a periodicity of the network device in the first mode, and the second mode is a mode in which cell access is not supported.

38. The method according to claim 33 or 34, wherein the switching from the second mode to the first mode comprises:
switching from the second mode to the first mode when a first start time arrives, wherein the first start time is related to a start time or an end time at which the second information is received.

39. The method according to claim 38, wherein there is an offset between the first start time and the start time or the end time at which the second information is received, and y1 is an integer greater than 0.

40. The method according to any one of claims 31 to 39, wherein before sending the first information, the method further comprises:
sending a first downlink signal, wherein the first downlink signal is used for at least one of the following: determining that the network device is in the second mode, determining a time domain position at which the network device sends the first information, determining a frequency domain position at which the network device sends the first information, or performing downlink synchronization, the second mode is a mode in which cell access is not supported, there is an offset of f1 time units between a start time or an end time at which the first downlink signal is sent and a start time at which the first information is sent or received, f1 is an integer greater than 0, and a frequency domain position of the first downlink signal is related to the frequency domain position of the first information.

41. The method according to any one of claims 31 to 40, wherein the method further comprises:
when in the second mode, receiving an uplink signal carried on a first resource, wherein the first resource is associated with a downlink synchronization signal sent by the network device, and the second mode is a mode in which cell access is not supported.

42. The method according to any one of claims 31 to 41, wherein the first information is carried in a broadcast message, and the broadcast message further carries information for synchronization.

43. The method according to any one of claims 31 to 42, wherein sending the first information comprises: sending, in a first beam direction, the broadcast message comprising the first information, wherein the first beam direction is one or more of a plurality of beam directions of the network device.

44. The method according to any one of claims 31 to 42, wherein sending the first information comprises: sending the first information when in the second mode, wherein the second mode is a mode in which cell access is not supported.

45. A communication method, wherein the method is applied to a communication apparatus, and the method comprises:
when a first cell managed by a network device is accessed or camped on, switching from a third mode to a fourth mode when the network device switches from a first mode to a second mode, wherein the first mode is a mode in which cell access is supported, the second mode is a mode in which cell access is not supported, an operation performed by the communication apparatus in the third mode comprises a first operation, an operation performed by the communication apparatus in the fourth mode does not comprise the first operation, and the first operation comprises at least one of the following: monitoring a control channel, receiving a downlink signal, or sending an uplink signal.

46. The method according to claim 45, wherein the method further comprises: receiving fourth information; and determining, based on the fourth information, a time period during which the network device is in the first mode or the second mode.

47. A communication method, wherein the method comprises:
when a first cell managed by a network device is accessed, switching from a connected mode to an idle mode when the network device switches from a first mode to a second mode, wherein the first mode is a mode in which cell access is supported, and the second mode is a mode in which cell access is not supported.

48. The method according to claim 47, wherein the method further comprises: receiving fourth information; and determining, based on the fourth information, a time period during which the network device is in the first mode or the second mode.

49. A communication method, wherein the method comprises:
when a first cell managed by a network device is accessed, handing over to a second cell before the network device enters a second mode, wherein the second cell is associated with a first network device different from the network device, and the second mode is a mode in which cell access is not supported.

50. The method according to claim 49, wherein the method further comprises:
receiving fourth information; and determining, based on the fourth information, a time period during which the network device is in the first mode or the second mode.

51. A communication method, wherein the method comprises:
when a first cell managed by a network device is accessed, performing a second operation or a third operation based on a type of a currently executed service, wherein the second operation comprises performing cell handover before the network device enters a second mode, the third operation comprises camping on the first cell after the network device enters the second mode, and the second mode is a mode in which cell access is not supported.

52. The method according to claim 51, wherein performing the second operation or the third operation based on the type of the currently executed service comprises: performing the second operation when the currently executed service has a continuity requirement; and/or performing the third operation when the currently executed service does not have a continuity requirement.

53. A communication method, wherein the method comprises:
when a first cell managed by a network device is accessed, sending an uplink signal by using a first resource when the network device is in a second mode, wherein the first resource is associated with a downlink synchronization signal, and the second mode is a mode in which cell access is not supported.

54. The method according to claim 53, wherein sending the uplink signal by using the first resource comprises: sending the uplink signal based on synchronization information by using the first resource, wherein the synchronization information is obtained based on a message sent by the network device in the second mode, or the synchronization information is obtained based on a message sent by the network device in a first mode, and the first mode is a mode in which cell access is supported.

55. The method according to claim 53 or 54, wherein the first information further comprises the synchronization information.

56. The method according to any one of claims 53 to 55, wherein the first information is carried in a broadcast message.

57. A communication apparatus, comprising a module configured to implement the method according to any one of claims 1 to 30.

58. A communication apparatus, comprising a module configured to implement the method according to any one of claims 31 to 44.

59. A communication apparatus, comprising a module configured to implement the method according to claim 45 or 46.

60. A communication apparatus, comprising a module configured to implement the method according to claim 47 or 48.

61. A communication apparatus, comprising a module configured to implement the method according to claim 49 or 50.

62. A communication apparatus, comprising a module configured to implement the method according to claim 51 or 52.

63. A communication apparatus, comprising a module configured to implement the method according to any one of claims 53 to 56.

64. A computer-readable storage medium, wherein the computer-readable storage medium stores a computer program, the computer program comprises program instructions, and when the program instructions are executed, a computer is enabled to perform the method according to any one of claims 1 to 56.

65. A communication apparatus, comprising a processor, wherein the processor is coupled to a memory, the memory stores computer program instructions, and the processor is configured to execute the computer program instructions, to enable the communication apparatus to perform the method according to any one of claims 1 to 56.

66. A chip, comprising:
a communication interface, configured to receive and send signals for the chip; and
a processor, configured to execute computer program instructions, to enable a communication apparatus comprising the chip to perform the method according to any one of claims 1 to 56.

67. A computer program product, wherein when the computer program product is run on a computer, the computer is enabled to perform the method according to any one of claims 1 to 56.
